(19) Europäisches Patentamt
European Patent Office
Office européen des brevets

(11) **EP 2 150 923 B1**

(12) **FASCICULE DE BREVET EUROPEEN**

(45) Date de publication et mention
de la délivrance du brevet:
**11.09.2019 Bulletin 2019/37**

(51) Int Cl.:
**G06K 9/00** *(2006.01)*     **G06K 19/06** *(2006.01)*
**G03G 21/04** *(2006.01)*     **G06K 19/08** *(2006.01)*
**G06K 19/10** *(2006.01)*

(21) Numéro de dépôt: **08805632.0**

(22) Date de dépôt: **02.06.2008**

(86) Numéro de dépôt international:
**PCT/FR2008/000743**

(87) Numéro de publication internationale:
**WO 2009/004172 (08.01.2009 Gazette 2009/02)**

(54) **PROCÈDE ET DISPOSITIF DE SÉCURISATION DE DOCUMENTS**

VERFAHREN UND VORRICHTUNG ZUR SICHERUNG VON DOKUMENTEN

METHOD AND DEVICE FOR SECURING DOCUMENTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **01.06.2007 FR 0703922**
**01.06.2007 PCT/FR2007/000918**

(43) Date de publication de la demande:
**10.02.2010 Bulletin 2010/06**

(73) Titulaire: **Advanced Track And Trace**
**92500 Rueil-Malmaison (FR)**

(72) Inventeurs:
• **PICARD, Justin**
**F-92500 Rueil-Malmaison (FR)**
• **MASSICOT, Jean-Pierre**
**F-92500 Rueil-Malmaison (FR)**
• **FOUCOU, Alain**
**F-92500 Rueil-Malmaison (FR)**
• **SAGAN, Zbigniew**
**F-92500 Rueil Malmaison_Cedex (FR)**

(74) Mandataire: **Cornuejols, Georges et al**
**Cassiopi**
**230 Avenue de l'Aube Rouge**
**34170 Castelnau-le-Lez (FR)**

(56) Documents cités:
**EP-A- 1 672 593**

**Description**

La présente invention concerne un procédé et un dispositif de sécurisation de documents. Elle vise, notamment, à identifier un document de manière unique, à l'authentifier, c'est-à-dire être capable de détecter sa copie et/ou à véhiculer, sur le document, de l'information relative à ce document, par exemple de l'information d'identification d'un propriétaire de droits de propriété intellectuelle attachés au document et/ou son lieu de fabrication. Le terme de document s'entend de tout support d'information, par exemple documents papier, document plan, emballages, pièces manufacturées, pièces moulées et cartes, par exemple d'identification ou bancaires.

On regroupe les différents types d'impression de documents en deux types, l'un dit « statique » par lequel chaque document reçoit sensiblement la même marque imprimée, par exemple un procédé d'impression analogique « offset » et l'autre dit numérique « sérialisé » par lequel chaque document reçoit une information individualisée, par exemple un procédé d'impression à jet d'encre commandé par un programme d'individualisation, et un procédé d'impression d'un numéro de série.

Pour l'impression offset, qui est un des moyens d'impression les plus utilisés pour les étuis et les emballages, une plaque est générée pour chaque couleur imprimée sur le document, et le contenu de cette plaque est imprimé des centaines de milliers jusqu'à des millions de fois. Dans ce cas, le même contenu, intégré à la plaque d'impression, est imprimé sur chaque document, à chaque impression. La flexographie, la typographie ou l'impression héliogravure sont d'autres exemples d'impression dite statique. En impression statique on ne peut, en principe, pas identifier individuellement les documents, puisque la même marque est imprimée à chaque fois. De plus, lorsque l'impression est statique et fait appel à des processus analogiques, il est plus difficile de contrôler le nombre exact de documents imprimés. Les risques de contrefaçons par impression d'une quantité de documents plus élevée que ce que le titulaire des droits a autorisé sont donc importants. Comment s'assurer que le nombre d'impressions dicté par l'ordre de fabrication, souvent inférieur à la limite d'utilisation de la plaque, a été respecté ? Comment s'assurer que toutes les impressions non utilisées (début ou fin de série, défauts, ordre annulé, etc.), ainsi que les plaques, films, et autres objets permettant de reconstituer les documents, ne tombent jamais dans les mains de contrefacteurs. ?

L'impression sérialisée, en permettant l'identification précise et sans équivoque de chaque document, est généralement préférable à l'impression statique. En effet, chaque identifiant n'étant imprimé qu'une seule fois en impression sérialisée, la lecture d'un doublon permet de déclencher une alarme : un doublon est un identifiant identique à un identifiant précédemment lu.

D'une manière générale, pour protéger les marques anti-copies et/ou identifiants, il existe plusieurs points à sécuriser : le fichier source, éventuellement le fichier PAO qui le contient, puis, dans le cas de l'impression offset, les plaques et éventuellement les films.

Il est possible d'effectuer l'équivalent d'une impression sérialisée d'une marque anti-copie sur un objet déjà imprimé de manière statique, en imprimant, dans un deuxième temps, un code unique ou numéro de série, en clair ou, préférablement, de façon chiffrée. Cette impression sérialisée peut prendre, par exemple, la forme d'un code à barres en deux dimensions. Un tel procédé est connu par example de EP1672593. En apparence, ce procédé permet de tracer individuellement chaque document tout en maintenant un moyen sûr de détecter les copies. Des documents volés n'ayant pas reçu l'impression sérialisée ne porteraient pas d'identifiant valide.

Cette approche ne résout cependant pas tous les problèmes. En effet, même si un malfaiteur ne peut identifier les documents falsifiés comme l'aurait fait l'imprimeur, le code unique imprimé par l'imprimante de sérialisation, en général offrant une qualité d'impression limitée, n'est pas protégé contre la copie.

Le contrefacteur ayant en sa possession des documents à identifier comme authentiques peut donc copier un ou plusieurs codes uniques valides et les recopier sur des documents à identifier comme authentiques.

L'art antérieur contient plusieurs méthodes exploitant des caractéristiques physiques mesurables afin de caractériser et identifier de manière unique chaque document. En général, les caractéristiques physiques mesurables choisies sont de nature aléatoire, et selon l'état actuel de la science et des techniques, ne sont pas copiables, du moins de manière rentable. Ces méthodes permettent de contrôler l'ensemble des documents considérés comme « valides » : seuls sont considérés valides les documents dont des caractéristiques physiques, composant un ensemble unique, ont été mémorisées.

Par exemple, le document US 4,423,415 décrit une méthode permettant d'identifier une feuille de papier d'après ses caractéristiques locales de transparence. Plusieurs autres procédés sont basés sur la saisie des attributs physiques uniques et non-reproductibles de la matière afin de générer une signature unique et non transférable dudit document. Par exemple, les documents WO 2006 016114 et US 2006/104103 sont basés sur la mesure du motif de diffraction induit par un rayon laser appliqué à une zone précise de l'objet.

Même si elles offrent une solution intéressante aux problèmes cités précédemment, les approches basées sur l'extraction d'une signature de la matière sont difficiles à utiliser pour plusieurs raisons. Premièrement, l'enregistrement des signatures lors de la fabrication des documents nécessite un lecteur optique coûteux, et s'intégrant difficilement aux chaînes de production. Ces dernières peuvent de plus avoir des cadences très élevées. D'une manière générale, il semble que ces techniques ne s'appliquent qu'aux productions à petite échelle. De plus, le lecteur utilisé en vérification, sur le terrain, est également trop coûteux pour plusieurs applications. Il est également volumineux et peu maniable, alors que souvent, les contrôles sur le terrain doivent se faire de manière rapide et discrète. Finalement, il n'est pas possible d'extraire une signature unique de tous les matériaux : le verre et les objets trop réfléchissants sont notamment exclus, du moins pour le cas des mesures de la diffraction d'un laser.

La présente invention vise à remédier à ces inconvénients et, notamment, aux difficultés et limites d'application des méthodes connues d'identification basées sur les attributs physiques uniques de la matière du document.

Les codes numériques authentifiants, aussi appelés par la suite « CNA », sont des images numériques qui, une fois marquées sur un support, par exemple par impression ou modification locale du support, sont conçues de façon à ce que certaines de leurs propriétés, en général mesurables automatiquement à partir d'une image captée, soient modifiées si une image marquée est copiée. Les codes numériques authentifiants se basent généralement sur la dégradation d'un ou plusieurs signaux sensibles à la copie lors de l'étape de copie, un signal étant porté par des éléments d'image aux caractéristiques mesurables sensibles à la copie. Certains types de codes numériques authentifiants peuvent également contenir de l'information permettant d'identifier ou tracer le document qui le contient.

Il existe plusieurs types de codes numériques authentifiants. Les motifs de détection de copie, aussi appelés par la suite « MDC », sont des images denses, en général de nature pseudo-aléatoire. Leur principe de lecture est basé sur une comparaison d'image pour mesurer un indice de similitude (ou de dissimilitude) entre le motif de détection de copie d'origine et le motif de détection de copie capturé, par exemple par un capteur d'image : si ce motif capturé est une copie, l'indice de similitude sera moins élevé que si c'est un original.

Les matrices d'information sécurisées, aussi appelés par la suite « MIS », sont, tout comme les codes à barre à deux dimensions, des images conçues pour transporter une grande quantité d'information de manière robuste. Cependant, contrairement aux codes à barre en deux dimensions, les matrices d'information sécurisées sont sensibles à la copie. A la lecture, on mesure un taux d'erreur du message codé extrait de la matrice, taux qui est plus élevé pour les copies que pour les originaux, ce qui permet de distinguer ces copies des impressions originales.

A moins d'être marqués de manière particulière, par exemple avec une encre invisible, les motifs de détection de copie et les matrices d'information sécurisées sont visibles. De plus, marquer les motifs de détection de copie et les matrices d'information sécurisées de manière invisible n'est pas toujours possible, à cause des contraintes de fabrication ou de coût. La visibilité d'une marque anti-copie peut être un désavantage sur le plan esthétique et, dans certains cas, sur le plan de la sécurité car le contrefacteur est informé de leur présence.

Il existe également des codes numériques authentifiants qui sont naturellement invisibles ou du moins difficiles à remarquer.

Par exemple, certains filigranes numériques (connus sous le nom de « watermarks ») intégrés dans des images imprimées sont conçus de façon à être endommagés lorsque l'image imprimée est reproduite, par exemple par photocopie. La mesure du degré de dégradation du filigrane numérique, moins élevé dans l'impression originale que dans une copie de celle-ci, permet de détecter ces copies.

La combinaison de plusieurs filigranes avec différents degrés de sensibilité à la copie permet, par une comparaison des niveaux respectifs d'énergie, de détecter les copies. L'intégration des filigranes numériques dans le processus de production des documents est cependant plus complexe, ce qui limite leur utilisation : en effet, contrairement aux motifs de détection de copie et aux matrices d'information sécurisées, le filigrane numérique ne peut pas être simplement « ajouté » à l'image ; le filigrane numérique est en effet une fonction complexe du message à ajouter et de l'image d'origine, l'énergie du filigrane numérique étant localement ajustée en fonction des propriétés de masquage de l'image d'origine. L'intégration de filigrane numérique sur des documents ou produits implique l'envoi de l'image source vers une unité centrale de marquage/impression qui intègre le filigrane numérique et retourne une image marquée. Cette procédure est peu pratique, en raison de la taille souvent très élevée des fichiers, et des problèmes de sécurité d'image associés. Par opposition, pour le marquage/impression avec un motif de détection de copie ou une matrice d'information sécurisée, l'image source ne doit pas être envoyée vers l'unité centrale de marquage/impression : à l'inverse, c'est l'image du motif de détection de copie ou de la matrice d'information sécurisée, d'une taille très faible en général, par exemple de quelques kilo-octets, qui est envoyée au détenteur des fichiers images qui seront apposés sur le document ou produit. De plus, la lecture des filigranes numériques est particulièrement difficile à stabiliser, ce qui rend la détermination de la copie par rapport à l'original d'un document plus aléatoire. En effet, les risques d'erreur sont en général nettement plus élevés avec les filigranes numériques qu'avec les motifs de détection de copie et les matrices d'information sécurisées.

On connaît aussi des procédés de marquage spatial à modulation asymétrique, aussi appelés « MSMA » par la suite, tels que ceux décrits dans les documents WO 2006 087351 et CH 694 233. Tout comme les filigranes numériques, les MSMA permettent un marquage invisible, ou du moins discret, des documents. Les MSMA sont, en général, des motifs de points, qui sont ajoutés au document à marquer en tant que couche supplémentaire. Par exemple, dans le cas d'un processus d'impression offset, une plaque supplémentaire supportant seulement le MSMA est sur-imprimée sur le document. Ainsi, les MSMA s'intègrent plus facilement que les filigranes numériques dans le processus de production des documents, l'image source n'étant pas nécessaire à l'unité centrale de marquage/impression. Cependant, contrairement aux motifs de détection de copie et aux matrices d'information sécurisées, les MSMA nécessitent, en général, une plaque ainsi qu'une encre supplémentaire, ce qui rend leur utilisation plus complexe et plus coûteuse. De plus, tout comme pour les filigranes numériques, les méthodes de détection des MSMA peuvent être imprécises. En effet, il est connu que le marquage/impression entraîne une incertitude de nature analogique dans le positionnement précis de l'image marquée. Cette incertitude, de l'ordre de dimension du point élémentaire imprimé, voire inférieure à celui-ci, a un effet non-négligeable sur la détection de copie, lorsque la surface marquée a une taille significative. Or les méthodes de détection des MSMA, basées sur l'auto-corrélation et la corrélation croisée, ne peuvent tenir compte de cette incertitude de positionnement. Cela augmente l'imprécision dans la lecture de la marque et, par conséquent, cela diminue la capacité de discernement entre les originaux et les copies.

Lorsque la capture est faite par des scanners à plat, permettant à la fois une large surface de capture et une résolution de capture suffisante, les MSMA permettent de détecter de simples copies, par exemple des photocopies, voire des copies de haute qualité faites par capture avec un scanner à haute précision ou résolution, suivie d'une réimpression. Cependant, face à un contrefacteur déterminé, les MSMA offrent une protection réduite contre la copie. En effet, après la capture à haute résolution, le contrefacteur peut utiliser des outils de traitement manuel d'image, tels que « Photoshop » (marque déposée), éventuellement en combinaison avec des outils de traitement automatique des images (tels que « Matlab », marque déposée), afin de restituer tous les points détectés sous leur forme initiale. Dans le cas d'une copie de haute qualité, les points ne seront pas plus affaiblis dans la marque copiée que dans la marque originale, et la copie a de fortes chances de ne pas être détectée comme telle. Ainsi, l'information contenue dans un MSMA est généralement réplicable à l'identique par un contrefacteur déterminé, ce qui ne permet pas d'envisager que cette méthode soit sécuritaire sur le long terme.

Pour les moyens d'impressions les plus utilisés (notamment l'offset), les MSMA (et autres codes numériques authentifiants) sont imprimés de manière statique. Les types d'impression les plus utilisés pour les MSMA et les codes numériques authentifiants étant statiques, il n'est pas possible de faire varier, à chaque impression, la marque et le message contenu.

Pourtant, il serait souhaitable de pouvoir caractériser, et ainsi identifier, de manière unique chaque impression d'une même image source. De même, il serait souhaitable d'identifier la plaque d'impression qui a été utilisée pour imprimer un document, afin d'effectuer une traçabilité de ces documents.

La présente invention vise à remédier à tout ou partie des inconvénients précités.

A cet effet, selon un premier aspect, la présente invention vise un procédé de sécurisation d'un document, décrit dans la revendication 1.

Grâce à ces dispositions, dès la génération de l'image numérique, les variations simulent des défauts d'impression. Le contrefacteur potentiel ne peut donc pas discerner les défauts résultants de l'impression des variations générées. Il ne peut donc pas les corriger pour obtenir un original identique à l'image numérique générée.

Selon des caractéristiques particulières, au cours de l'étape de génération de la distribution de points, l'amplitude géométrique des variations générées est inférieure à la dimension des points.

On augmente ainsi l'efficacité du procédé objet de la présente invention.

Selon des caractéristiques particulières, au cours de l'étape de génération de la distribution de points, on génère une distribution de points en fonction de la variation imprévisible du système d'impression utilisé. On note ici que la variation due à l'impression est imprévisible point par point mais qu'une analyse statistique permet de connaître son amplitude moyenne, qui, elle, est relativement stable.

Selon des caractéristiques particulières, au cours de l'étape de génération, des points de la distribution de points ont au moins une caractéristique géométrique variable, ladite variation n'étant pas répétitive dans ladite distribution de points.

On augmente ainsi la difficulté de déterminer quels points ont été modifiés par une variation d'impression imprévisible.

Selon des caractéristiques particulières, au cours de l'étape de génération, dans ladite distribution de points, au moins la moitié des points de ladite distribution ne sont pas juxtaposés latéralement à quatre autres points de ladite distribution de points.

Selon des caractéristiques particulières, au cours de l'étape de génération de la distribution de points, plus de la moitié des points ne touchent aucun autre point de ladite distribution.

On évite, grâce à chacune de ces dispositions, que des influences entre les impressions des points juxtaposés ne nuisent à l'efficacité de la présente invention.

Selon des caractéristiques particulières, ladite variation générée correspond à une variation de position de points, dans au moins une direction, par rapport à une position où les centres des points sont alignés sur des lignes parallèles perpendiculaires à ladite direction et éloignées d'au moins une dimension desdits points dans cette direction.

Selon des caractéristiques particulières, ladite variation générée correspond à une variation d'au moins une dimension de points, dans au moins une direction, par rapport à une dimension moyenne desdits points, dans cette direction.

Selon des caractéristiques particulières, ladite variation générée correspond à une variation de forme des points, par rapport à une forme moyenne desdits points, dans cette direction.

Selon des caractéristiques particulières, au cours de l'étape de génération, ladite distribution de points est représentative d'une information codée.

On insère ainsi un message dans la distribution de points générée.

Selon des caractéristiques particulières, le procédé objet de la présente invention, tel que succinctement exposé ci-dessus, comporte une étape de capture d'image de la distribution de points imprimée et une étape de détermination d'une signature unique de ladite distribution imprimée, en fonction de ladite variation imprévisible d'impression.

Grâce à ces dispositions, on peut identifier chaque document imprimé.

Selon des caractéristiques particulières, le procédé objet de la présente invention, tel que succinctement exposé ci-dessus, comporte une étape de détermination d'une grandeur représentative de la variation imprévisible du fait d'aléas d'impression du document imprimé par rapport à un distribution de points de référence, l'étape de génération de la distribution de points étant fonction de ladite grandeur.

Selon des caractéristiques particulières, le procédé objet de la présente invention, tel que succinctement exposé ci-dessus comporte une étape de détection de copie en fonction de la grandeur représentative de la variation imprévisible du fait d'aléas d'impression, du document testé, par rapport à une distribution de points de référence, ladite étape de détection de copie comportant une étape de comparaison de ladite grandeur représentative avec une valeur prédéterminée, et une étape de décision de l'authenticité du document en fonction du résultat de la comparaison.

Selon un deuxième aspect, la présente invention vise un dispositif de sécurisation d'un document, décrit dans la revendication 14.

Selon un troisième aspect, la présente invention vise un procédé de lecture d'une distribution de points sur un document, décrit dans la revendication 15.

Selon un quatrième aspect, la présente invention vise un dispositif de lecture d'une distribution de points sur un document, décrit dans la revendication 16.

Selon un cinquième aspect, la présente invention vise un programme chargeable dans un système informatique, ledit programme contenant des instructions permettant la mise en oeuvre du procédé objet de la présente invention, tel que succinctement exposé ci-dessus.

Selon un sixième aspect, la présente invention vise un support d'informations lisibles par un ordinateur ou un microprocesseur, amovible ou non, conservant des instructions d'un programme informatique, caractérisé en ce qu'il permet la mise en oeuvre du procédé objet de la présente invention, tel que succinctement exposé ci-dessus.

Les avantages, buts et caractéristiques particulières de ces dispositif, de ce procédé de lecture, de ce programme d'ordinateur et de ce support d'information étant similaires à ceux du procédé de sécurisation objet de la présente invention, telle que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés, dans lesquels :

- la figure 1 représente une marque numérique agrandie d'un facteur d'environ 20,
- la figure 2 représente la marque illustrée en figure 1, après impression, agrandie,
- la figure 3 représente une photocopie de la marque imprimée illustré en figure 2, agrandie,
- la figure 4 montre une copie de haute qualité de la marque imprimée illustré en figure 2, agrandie,
- la figure 5 représente, agrandi, un MPCV, la caractéristique variable étant ici une hauteur de point,
- la figure 6 représente un agrandissement, d'un facteur d'environ 200 d'une partie du MPCV de la figure 5, une fois imprimé,
- la figure 7 montre deux impressions agrandies d'un même MPCV ayant une taille de points constante avant impression,
- la figure 8 représente, agrandie, une matrice d'information sécurisée comportant, en son centre, un MPCV,
- la figure 9 représente, agrandie, une matrice d'information sécurisée qui est entourée d'un MPCV,
- la figure 10 représente, agrandi, un MPCV dont les quatre coins consistent en un point entourés de quatre points qui sont proches,
- la figure 11 représente, agrandi, un MPCV avec des lignes de points sur les quatre côtés,
- la figure 12 représente, agrandie, une partie d'un MPCV en forme de grille,
- la figure 13 représente la valeur absolue de la transformée de Fourier bidimensionnelle du MPCV représenté en figure 12,
- la figure 14 représente, agrandi, un détail d'un MPCV représentant de l'information codée,
- la figure 15 représente, schématiquement, un mode de réalisation particulier du dispositif objet de la présente invention,

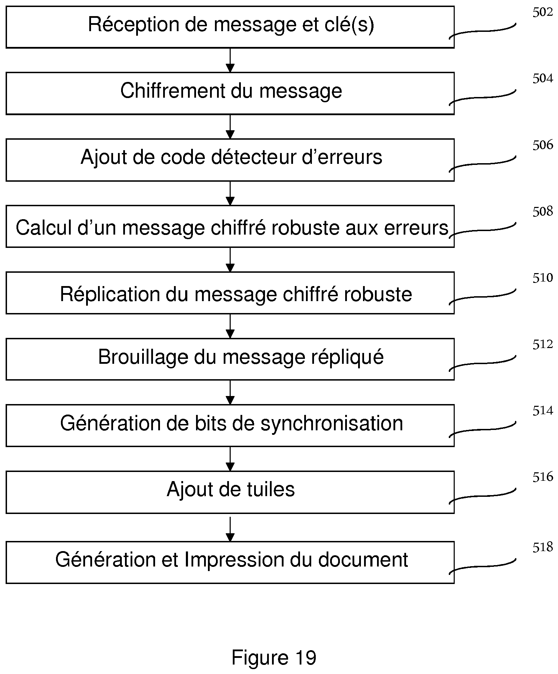

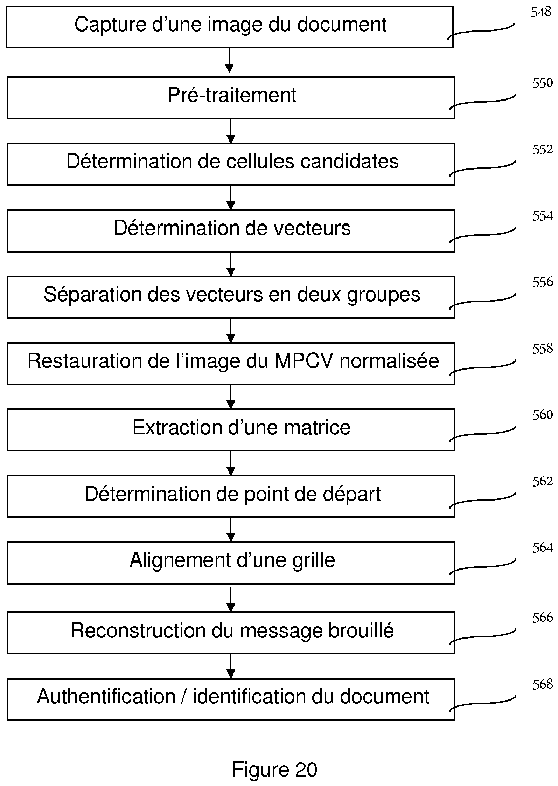

- les figures 16A à 20 représentent, sous forme de logigrammes, des étapes mises en oeuvre dans des modes de réalisation particuliers des différents aspects du procédé objet de la présente invention,

- la figure 21 représente une partie agrandie d'un MPCV de forte densité,
- la figure 22 représente une partie agrandie d'un MPCV à gradient de dimensions de points,
- la figure 23 représente, sous forme d'un logigramme, des étapes mises en oeuvre dans un mode de réalisation particulier du procédé objet de la présente invention,
- la figure 24 représente, en vue agrandie, un motif numérique identifiant mis en oeuvre dans des modes de réalisation particuliers du procédé objet de la présente invention,
- la figure 25 représente, en vue agrandie, le motif numérique identifiant de la figure 24, une fois imprimé sur un objet, lors d'une première impression d'une série,
- la figure 26 représente, en vue agrandie, le motif numérique identifiant de la figure 24, une fois imprimé sur un objet, lors d'une deuxième impression d'une série,
- la figure 27 représente une transformée cosinus discrète d'une image captée de l'un des motifs identifiants imprimés représentés dans les figures 25 et 26,
- les figures 28A à 28C représentent, sous forme de logigrammes, des étapes mises en oeuvre dans des modes de réalisation particuliers du procédé objet de la présente invention,
- la figure 29 représente une distribution des scores pour deux groupes de motifs identifiants mis en oeuvre dans des modes de réalisation particuliers du procédé objet de la présente invention,
- la figure 30 représente une distribution de points à imprimer,
- la figure 31 représente une image agrandie d'impression de la partie en haut à gauche d'impressions de la distribution de points illustrée en figure 30,
- la figure 32 représente des nuages de mesures de corrélation de formes de points de la distribution de point illustrée en figure 30,
- la figure 33 illustre en courbe obtenue lors de la détermination d'un taux optimale d'erreurs à obtenir à l'impression et
- la figure 34 illustre, sous forme d'un logigramme, des étapes mises en oeuvre dans un procédé de détermination de plaque ayant servi à l'impression d'un document.

Avant de donner le détail de différents modes de réalisation particuliers de la présente invention, on donne, ci-après, des définitions qui seront utilisées dans la description.

- « matrice d'informations » : il s'agit d'une représentation physique d'un message, généralement apposée sur une surface unie (à la différence des watermarks ou filigranes numériques qui modifient les valeurs de pixels d'un décor à imprimer), lisible par une machine (en anglais « machine-readable représentation of information »). La définition de la matrice d'informations englobe, par exemple, les codes à barres 2D, les codes à barres à une dimension et d'autre moyens de représentation de l'information qui sont moins intrusifs, tel que les « Dataglyphs » (marquage de données) ;
- « document » : il s'agit de n'importe quel objet (physique) portant une matrice d'information ;
- « marquage » ou « impression » : tout processus par laquelle on passe d'une image digitale (incluant une matrice d'information, un document..) à sa représentation dans le monde réel, cette représentation étant généralement faite sur une surface : ceci inclut, de manière non-exclusive, l'impression à jet d'encre, laser, offset, thermique, ainsi que l'embossage, la gravure laser, la génération d'hologrammes. Des processus plus complexes, tel que le moulage, dans lequel l'image digitale est d'abord gravée dans le moule, puis moulée sur chaque objet, sont également inclus. Notons qu'une image « moulée » peut être vue comme ayant trois dimensions dans le monde physique même si sa représentation digitale en comporte deux. Notons encore que plusieurs des procédés mentionnés incluent plusieurs transformations, par exemple l'impression offset classique (contrairement au offset « computer-to-plate »), inclut la création d'un film, ledit film sevrant à créer une plaque, ladite plaque étant utilisée dans l'impression. D'autres procédés permettent également d'imprimer une information dans le domaine non-visible, soit en utilisant des fréquences à l'extérieur du spectre visible, ou encore à inscrivant l'information à l'intérieur de la surface, etc,
- « Motif identifiant », ou « MI » : image imprimée à partir d'une image source (numérique), conçue et imprimée de telle sorte que chacune des impressions de ladite image source peut être identifiée avec une grande probabilité ».
- « Caractéristiques uniques » : attributs physiques uniques d'un motif identifiant, permettant de le distinguer de toute autre impression de la même image source.
- « Empreinte » : ensemble des valeurs des caractéristiques mesurées, permettant de représenter un motif identifiant et de le comparer à d'autres représentations de motif identifiant.
- « Capture » : tout processus par lequel on obtient une représentation digitale du monde réel, incluant la représentation digitale d'un document physique contenant une matrice d'information,
- « Cellule » : il s'agit d'une zone régulière d'un motif de points à caractéristiques variables (« MPCV »), généralement rectangulaire, voire carrée, dans laquelle se trouve, au maximum, un nombre prédéterminé de points, le nombre prédéterminé valant généralement un, sans dans des variantes signalées ;

- « Pixel de génération » : la plus petite zone considérée pour la génération d'un MPCV,
- « Point » : une zone imprimée élémentaire de très petite dimension, éventuellement variable, faisant contraste avec un arrière-plan, le point étant généralement la représentation d'un ou plusieurs pixels de génération,
- « Pixel de capture » ou « pixel d'image » : une zone dont l'image correspondant à un point photosensible élémentaire, ou pixel, d'un capteur d'image,
- « Ordre de grandeur » : une grandeur physique A est du même ordre de grandeur qu'une grandeur physique B, si la valeur de A est entre un dixième et dix fois la valeur de B et, préférentiellement, entre la moitié et deux fois.

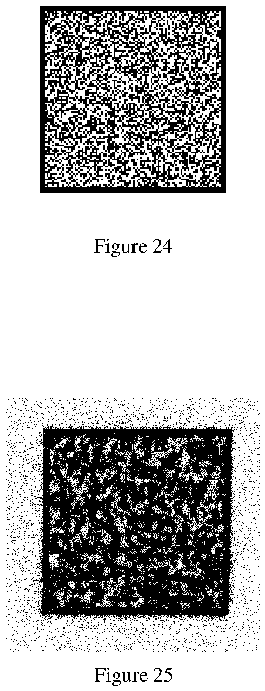

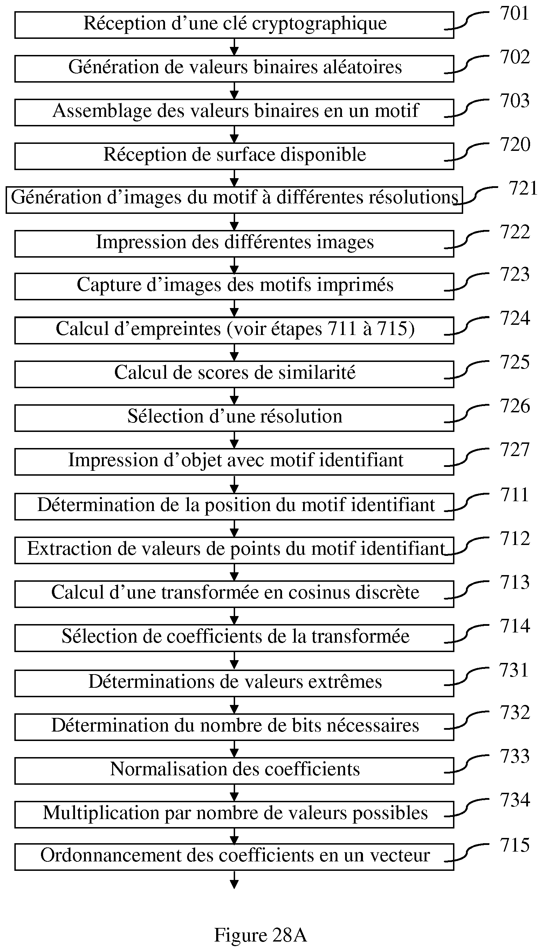

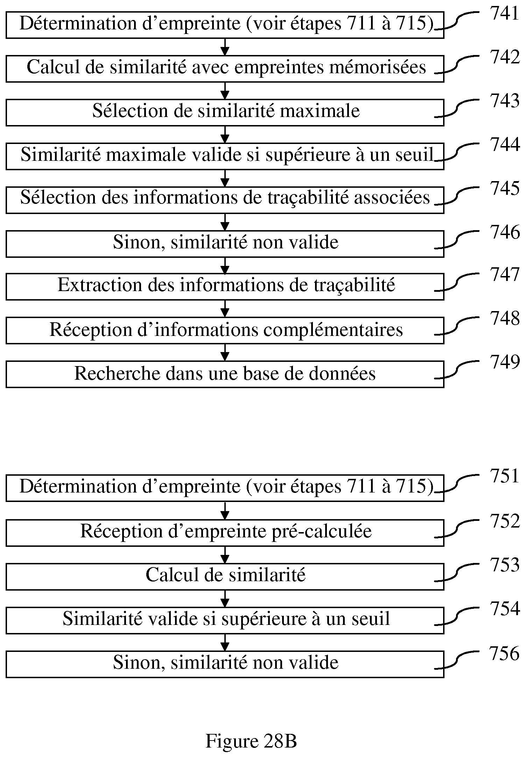

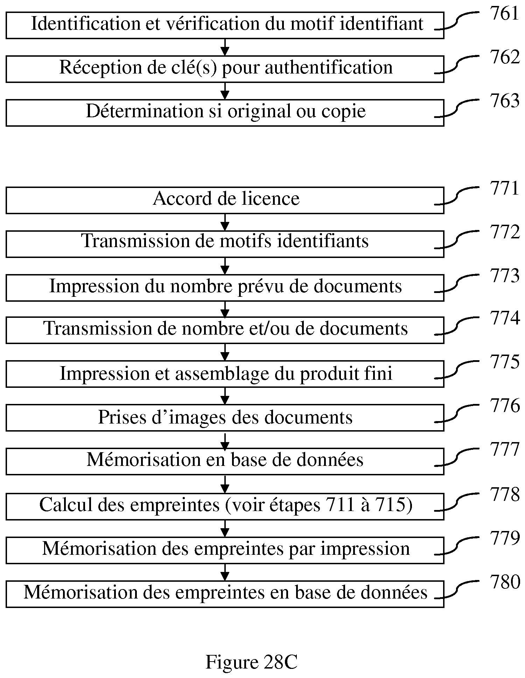

Dans les modes de réalisation de la présente invention décrits ci-dessous en regard des figures 24 à 29, on met en oeuvre :

- des étapes 701 à 703 de conception numérique des motifs identifiants,
- des étapes 711 à 715 de calcul d'empreinte de motif identifiant (selon l'une des méthodes décrites par ailleurs),
- des étapes 720 à 726 d'optimisation de l'impression des motifs identifiants,
- des étapes 731 à 734 de stockage et de représentation d'empreintes ou caractéristiques uniques de documents,
- des étapes 741 à 749 d'identification d'empreinte en mettant en oeuvre une base de données,
- des étapes 751 à 756 de vérification d'empreinte sans base de données,
- des étapes 761 à 763 d'utilisation combinées d'un motif identifiant et d'un code numérique authentifiant et
- des étapes 771 à 780 de sécurisation de document.

En ce qui concerne la conception numérique d'un motif identifiant et la détermination des paramètres d'impression d'un motif identifiant, à l'origine de certaines caractéristiques particulières de la présente invention, il a été découvert que, si l'on imprime plusieurs fois une même image source d'une matrice d'information sécurisée, celle-ci sera affectée d'erreurs différentes à chaque impression. Le même effet a également été constaté pour les motifs de détection de copie. De manière plus générale, il a été constaté que, pour toute image possédant une densité suffisante, 1) l'impression de l'image résultera en une dégradation de celle-ci, et 2) et celle-ci sera affectée d'une dégradation différente à chaque impression.

Pour être plus précis, ce phénomène n'est pas limité aux codes numériques authentifiants. En effet, quelle que soit la densité d'une image numérique, chacune des impressions de celle-ci différera de toutes les autres impressions, étant donnés les processus aléatoires à l'oeuvre durant l'impression. Seulement, pour des images de faibles densités, les différences seront beaucoup moins nombreuses et significatives. Il faut alors une résolution de capture beaucoup plus importante afin de capter les différences qui sont parfois minimes. A l'inverse, pour les codes numériques authentifiants imprimés avec la résolution adéquate il n'est pas nécessaire d'utiliser une résolution de capture particulièrement élevée (un scanner à 1 200 points par pouce se révèle suffisant). De plus, comme les différences sont très significatives, l'extraction des caractéristiques uniques ne doit pas être faite avec une précision très élevée, ce qui est avantageux au niveau du coût et de la stabilité des algorithmes de lecture.

Les motifs identifiants sont des images conçues et imprimées de façon à maximiser les différences entre chaque impression d'un même motif identifiant source. Ces images sont préférentiellement conçues de manière pseudo-aléatoires (par exemple avec une ou plusieurs clés cryptographiques), mais elles peuvent être complètement aléatoires (la différence étant que, dans le deuxième cas, il n'existe pas de clé cryptographique, ou la clé n'est pas conservée). Cependant, on note que le motif identifiant numérique d'origine peut être connu sans compromettre la sécurité, en principe: en effet, seuls les motifs identifiants répertoriés (ayant leur empreinte) dans la base de données sont légitimes, et il n'est en principe pas possible de contrôler les aléas de l'impression. Donc, la possession de l'image d'origine ne donne pas d'avantage réel au contrefacteur : ceci est un autre avantage, en termes de sécurité, des motifs identifiants.

Comme les dégradations sont de nature aléatoire et produisent un résultat différent pour chaque impression d'une même image source, chaque impression d'un motif identifiant recèle des caractéristiques uniques, non reproductibles et non transférables. Ainsi, chacune des impressions d'un même motif identifiant diffère de toutes les autres, et recèle donc intrinsèquement les moyens de l'identifier sans équivoque. On peut donc calculer une empreinte d'un motif identifiant, et l'utiliser de différentes façons afin d'augmenter la sécurité du document qui la contient, notamment en modes identification et vérification.

Les motifs identifiants peuvent être de simples rectangles, éventuellement encadrés d'une bordure facilitation leur détection, mais peuvent également avoir une forme particulière, tel qu'un logo, etc. Cependant, la forme rectangulaire se révèle avantageuse du point de vue de la lecture (elle est facilement repérable) et de sa compatibilité avec les formes habituelles des codes numériques authentifiants ou autre codes tels que le code barre en une ou deux dimensions.

On décrit, ci-dessous, un algorithme de conception d'un motif identifiant :

- au cours d'une étape 701, on reçoit une clé cryptographique, par exemple une séquence de 32 octets (256 bits),
- au cours d'une étape 702, en utilisant une fonction de hachage ou de chiffrement de manière récursive, l'algorithme étant initialisé avec la clé cryptographique, on génère le nombre de requis de bits aléatoires. Par exemple, pour un motif identifiant de 10.000 pixels en noir et blanc (1 bit par pixel), il faut 10 000 bits ; il en faut 8 fois plus pour un motif identifiant en niveaux de gris (chaque niveau étant équiprobable). En supposant que la fonction de hachage SHA-1 soit utilisée (entrée et sortie de 256 bits), il faut faire 40 appels (un bit par pixel) ou un peu moins que 320 appels (huit bits par pixel) à la fonction pour obtenir les bits nécessaires (car 40 x 256 >= 10 000 ou 320 x 256 >= 80 000). Le lecteur pourra s'inspirer des normes FIPS (acronyme de « Fédéral information processing standard » pour standard de traitement d'information fédéral) et AES (acronyme de « Advanced Encryption Standard » pour standard de chiffrement avancé) et

- au cours d'une étape 703, on assemble les bits en une image, par exemple de 100 x100 points, éventuellement complétée par une bordure.

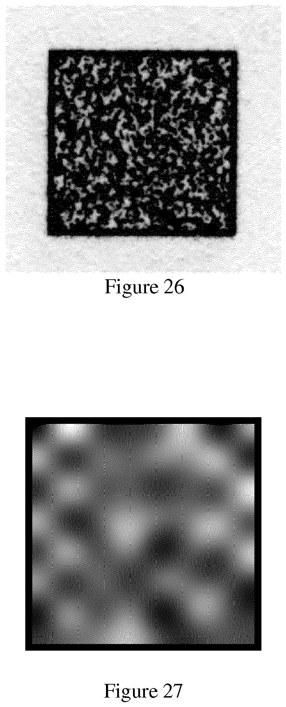

La Figure 24 montre un tel motif identifiant, avant l'impression. Les Figures 25 et 26 montrent deux impressions différentes du motif identifiant illustré en 24.

Les fonctionnalités d'un code numérique authentifiant peuvent être combinées à celles d'un motif identifiant, car les caractéristiques de conception et d'impression des codes numériques authentifiants sont proches de celles requises pour les motifs identifiants. Par exemple, les algorithmes de conception des motifs de détection de copie, qui nécessitent une clé cryptographique, s'apparentent à l'algorithme décrit précédemment, bien que le but recherché soit très différent. Les algorithmes de conception des matrices d'information sécurisées, eux, nécessitent à la fois une ou plusieurs clés cryptographiques, et un ou plusieurs messages. Le résultat est cependant similaire, soit une image aux valeurs pseudo aléatoires.

Comme on le verra plus loin, il s'avère que les conditions idéales d'impression des motifs identifiants sont proches des conditions idéales d'impression des codes numériques authentifiants. Ainsi, il est possible, autant sur le plan de la conception que du résultat imprimé, de combiner les fonctionnalités des codes numériques authentifiants à celle des matrices d'information.

En ce qui concerne les méthodes d'extraction et, lors de la vérification d'un document, de comparaison, de l'empreinte d'un motif identifiant, on décrit, d'abord, ci-dessous une méthode d'extraction et de comparaison d'empreinte générique, qui consiste à extraire les valeurs d'un ensemble de points d'un motif identifiant capturé :

- au cours d'une étape 711, on détermine la position du motif identifiant dans l'image du document imprimé. Pour un motif identifiant de forme rectangulaire, on peut, par exemple, extraire les positions (hauteur, largeur) des quatre extrémités du motif identifiant,
- au cours d'une étape 712, pour un nombre déterminé de points à extraire, on détermine la position dans l'image capturée et extraire la valeur de chacun des points. Par exemple, 256 points horizontalement et 256 verticalement, pour un total de $256^2$, un nombre de points correspondant à 2 élevé à une puissance entière est avantageux si, par exemple, une FFT (transformée de Fourier rapide) ou une DCT (transformée en cosinus discrète) est utilisée ultérieurement. La détermination de la position des points peut se faire en utilisant des techniques géométriques standards, connues de l'art antérieur : détermination de la position de points de référence (par exemple, les quatre extrémités du motif identifiant si celui-ci est rectangulaire), puis détermination de la position des points en faisant l'hypothèse que l'image capturée a subi une transformée affine ou perspective, par exemple. Les valeurs sont typiquement, par exemple, sur une échelle de 0 à 255, de même que l'image capturée. Comme les positions peuvent être fractionnaires, la valeur du point prise peut être celle « du plus proche voisin », méthode peu coûteuse mais peu précise. Des algorithmes d'interpolation, avec un coût s'accroissant avec la précision requise, peuvent également être utilisés : interpolation bicubique, bilinéaire, etc. Le résultat est une matrice 256 x 256 de valeurs entières (plus proche voisin) ou en virgule flottante (interpolation),

- au cours d'une étape 713, on calcule la transformée en cosinus discrète en deux dimensions de la matrice. La transformée en cosinus discrète est avantageuse car elle permet de compresser fortement l'énergie du signal sur un faible nombre de composants,
- au cours d'une étape 714, on sélectionne un nombre déterminé de coefficients, par exemple les 10 x 10 coefficients de fréquence la plus basse, et éventuellement éliminer le coefficient constant, connu sous le nom de coefficient « DC » à la position (0,0)
- au cours d'une étape 715, on ré-ordonne les coefficients en un vecteur, qui constitue l'empreinte de la matrice d'information sécurisée.

On note que la méthode décrite précédemment ne met en oeuvre aucun secret, et, par conséquent, permet à quiconque de calculer l'empreinte. Ceci peut être souhaitable dans certains cas, où on considère que cela ne pose pas de risque de sécurité. Par contre, dans d'autres cas, il est souhaitable que seules les personnes autorisées puissent calculer l'empreinte. Pour cela, on met en oeuvre une clé cryptographique tenue secrète qui permet de déterminer les coefficients constituants l'empreinte. Cette clé n'est divulguée qu'aux personnes ou entités autorisées à reconstituer l'empreinte. Des techniques issues de l'art antérieur sont disponibles à l'homme du métier afin de sélectionner les coefficients à partir de la clé, mettant généralement en oeuvre un algorithme de hachage ou un algorithme de chiffrement.

Deux empreintes correspondant à des captures distinctes peuvent alors être comparées de multiples manières, afin d'obtenir une mesure de similarité ou, inversement, une mesure de distance. En mesurant, par exemple, un coefficient de corrélation entre elles, on obtient une mesure de similarité, que l'on dénommera « score » par la suite.

Pour valider cette méthode d'extraction de caractéristiques uniques, on a généré un motif identifiant de 100 x 100 pixels que l'on a imprimé 100 fois, sur une imprimante laser à 600 points par pouce. Un scanner « flatbed » à 1200 points par pouce a été utilisé pour réaliser trois captures de chaque motif identifiant imprimé. On a ensuite calculé une empreinte pour chacune des 300 captures effectuées. On mesure alors un score pour chacun des 44 850 couples d'empreintes (nombre calculé comme suit : 300*(300-1)/2). On sépare ces 44 850 couples d'empreinte en deux groupes :

- un groupe A de 600 couples d'empreintes correspondant à différentes captures du même motif identifiant imprimé et
- un groupe B de 44 250 couples d'empreintes correspondant à des captures de différents motifs identifiants imprimés.

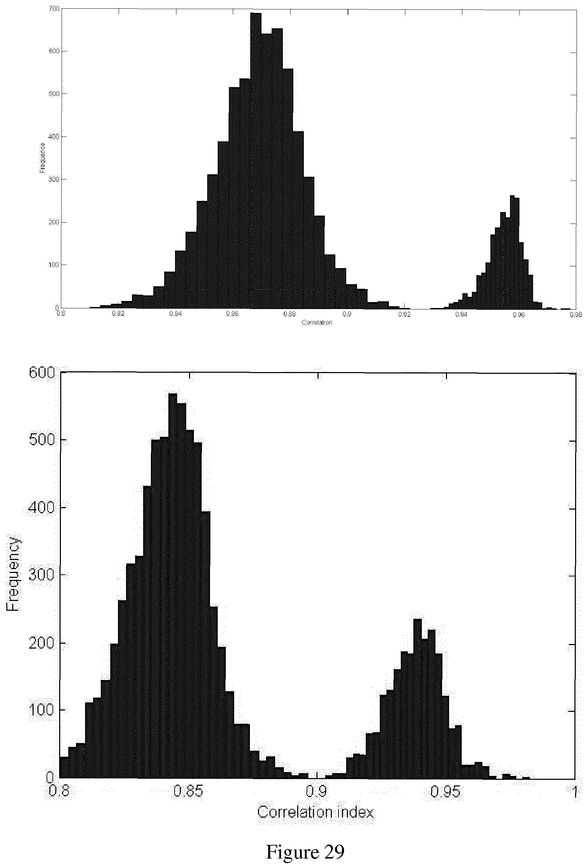

Le score est compris entre 0,975 et 0,998 pour le groupe A, et est compris entre 0,693 et 0,945 pour le groupe B. La Figure 29 montre la distribution des scores pour le groupe A et pour le groupe B. Sur la base de ces scores, il n'y a aucune confusion possible entre les couples des deux groupes. Ainsi, en utilisant la méthode de calcul d'empreinte décrite précédemment, on peut déterminer sans ambiguïté laquelle des 100 impressions est à l'origine de l'image capturée.

On mesure un « degré de séparation des empreintes », qui consiste à calculer la différence des moyennes des scores pour les groupe A et B (ici respectivement de 0,992 et 0,863) et à la normaliser par l'écart type des scores du groupe A, ici de 0,005. On obtient une valeur de 25,8. Comme on le verra plus bas, cet index est utile pour déterminer les paramètres d'impressions et de conceptions donnant les meilleurs résultats.

On décrit, ci-dessous, une deuxième méthode d'extraction d'empreinte concernant les matrices d'information sécurisées. Cette méthode, qui s'applique en particulier lorsque le motif identifiant a également les fonctionnalités d'une matrice d'information sécurisée. Il y est expliqué comment le message brouillé d'une matrice d'information sécurisée captée est extrait. Ce message brouillé possède un taux d'erreur non-nuls et la structure des erreurs est utilisée comme empreinte.

Un avantage de cette méthode est qu'elle permet d'utiliser un logiciel conçu pour la lecture des matrices d'information sécurisées, Cela minimise le coût des calculs nécessaires.

Cependant, la lecture précise d'une matrice d'information sécurisée nécessite la clé servant à générer les blocs d'aligner, s'il y a lieu. On ne souhaite pas forcément divulguer cette clé dans tous les cas. De plus, les variations d'alignement interne, spécifiques à chaque impression sont autant que possibles éliminées. Ceci n'est pas forcément souhaitable, car ces variations participent à la différenciation des différentes impressions d'une matrice d'information sécurisée.

En ce qui concerne la méthode de détermination des paramètres de génération et d'impression optimaux des motifs identifiants, il existe un taux de dégradation optimal permettant de séparer le plus aisément possible les différentes impressions d'un même motif identifiant source. Ainsi, si le taux de dégradation à l'impression est très faible, par exemple 1% ou 2% (1 ou 2% des cellules ou pixels du motif identifiant sont mal lues à partir d'une capture parfaite), les différentes impressions d'un même motif identifiant sont très proches l'une de l'autre, et il est difficile de les identifier de manière fiable, à moins d'avoir une capture très précise de l'image et/ou un algorithme d'analyse très précis. Similairement, lorsque le taux de dégradation est très élevé, par exemple 45 à 50 % (45 ou 50 % des cellules de la matrice d'information sécurisée sont mal lues à partir d'une capture parfaite, 50 % signifiant qu'il n'y a aucune corrélation statistique entre la matrice lue et la matrice d'origine), les motifs identifiants imprimées sont quasi indistinctes les unes des autres. En réalité, le taux de dégradation optimal est proche de 25 %, et si les conditions de l'application le permettent, il est préférable de s'en approcher. En effet, pour 25 % de dégradation, en supposant que les variations d'impression et donc les dégradations soient de nature probabiliste, on maximise, en chacun des points du motif identifiant imprimé, les chances qu'il diffère des autres motifs identifiants imprimés.

On donne, ci-dessous, un deuxième analyse des taux d'erreur à rechercher au moment de la génération d'une image à imprimer en fonction des moyens d'impression à mettre en oeuvre.

Afin de déterminer comment on peut générer des MPCV permettant d'optimiser la détection de copie, nous présentons ci-dessous un modèle basé sur la théorie de la décision. Les caractéristiques mesurées sur les images (ou points) sont représentées par des signaux. Pour simplifier l'analyse, on y fait l'hypothèse que les signaux numériques, avant impression, ont des valeurs binaires, correspondant à des caractéristiques pouvant avoir des valeurs binaires (par exemple deux tailles de points, deux positions,etc.). Cette hypothèse se justifie par le fait que la plupart des procédés d'impression traitent des images binaires. Evidemment, les conclusions de l'analyse peuvent être étendues à des cas plus complexes, notamment avec plusieurs valeurs possibles de caractéristiques de point. L'impression du MPCV est modélisée par l'ajout de bruit gaussien. Il est également supposé que les copies sont réalisées avec le même procédé d'impression, de sorte que l'impression de la copie est modélisée également par l'ajout de bruit gaussien de même énergie. De plus, le contrefacteur, qui capte le signal avant d'en imprimer une copie est forcé de reconstruire un signal binaire en faisant un estimé de la valeur initiale qui minimise sa probablité d'erreur.

Ce modèle correspond directement à des MPCV pouvant avoir des tailles de point de 1x1 pixel ou 1x2 pixels (imprimé, par exemple, à 2 400 dpi), pour lequel le contrefacteur doit nécessairement choisir une des tailles de point dans l'image reconstruite à partir d'un scan, en fonction d'un niveau de gris mesuré ou d'une surface estimée du point. Le modèle correspond également à des MPCV avec des positions variant de 1 pixel, par exemple.

A partir de ce modèle, nous dérivons le détecteur optimal, la distribution statistique des valeurs du détecteur, et les valeurs de paramètre qui maximisent la détection de copie.

Le tableau suivant résume les différentes variables.

| s | Signal source |
|---|---|
| $n, n_c$ | Bruit, bruit copie |
| x | Signal reçu |

Sans perte de généralité, le signal source est équiprobable, c'est-à-dire $s[i]:\{+a,-a\}$, pour $i = 0,1,..., N$-1, et $a > 0$. Le bruit d'impression est distribué selon une loi gaussienne $N(0,\sigma^2)$.

Les hypothèses du modèle se résument ainsi:

$$(H0)x[i] : \{+a,-a\} \tag{1}$$

$$(H1)n[i] : N(0,\sigma^2) \tag{2}$$

$$(H2)n_c[i] : N(0,\sigma^2) \tag{3}$$

On peut facilement vérifier que le contrefacteur minimise sa probabilité d'erreur en restaurant le signal à la valeur la plus proche entre $+a,-a$.

Par conséquent, le problème de détection consiste à distinguer les deux hypothèses suivantes :

$$H_0 : x[i] = s[i] + n[i] \tag{4}$$

$$H_1 : x[i] = a.sign(s[i] + n[i]) + n_c[i] \tag{5}$$

où $H_0$ et $H_1$ sont les hypothèses que le signal reçu est un original, respectivement, une copie.

La probabilité que le contrefacteur a correctement estimé la valeur est :

$$p(sign(s[i] + n[i]) = s[i]) = p(s[i] + n[i] > 0) \tag{6}$$

$$= p(N(a,\sigma^2) > 0) \tag{7}$$

$$= p(N(0,1) > -a/\sigma) \tag{8}$$

$$= Q(-a/\sigma) \tag{9}$$

où

$$Q(x) = (2\pi)^{-1/2} \int_{-a/\sigma}^{+\infty} \exp^{-x^2/2} dx .$$

Nous avons les distributions de probabilité suivantes pour le signal reçu, où dans l'hypothèse $H_1$ nous avons une mixture de deux distributions Gaussiennes.

$$p(x;H_0) = \frac{1}{(2\pi\sigma^2)^{N/2}} \exp[-\frac{1}{2\sigma^2} \sum_{n=0}^{N-1}(x[n]-s[n])^2] \qquad (10)$$

$$p(x;H_1) = (1-Q(-a/\sigma))\frac{1}{(2\pi\sigma^2)^{N/2}} \exp[-\frac{1}{2\sigma^2} \sum_{n=0}^{N-1}(x[n]+s[n])^2] + \qquad (11)$$

$$Q(-a/\sigma)\frac{1}{(2\pi\sigma^2)^{N/2}} \exp[-\frac{1}{2\sigma^2} \sum_{n=0}^{N-1}(x[n]-s[n])^2] \qquad (12)$$

Nous allons vérifier qu'un simple corrélateur donne une fonction de classification optimale. Un test de Neyman-Pearson detector decide $H_1$ si le rapport de vraisemblance excède un seuil $t$:

$$L(\mathbf{x}) = \frac{p(\mathbf{x};H_1)}{p(\mathbf{x};H_0)} > t \qquad (13)$$

Le rapport de vraisemblance est donné par:

$$L(\mathbf{x}) = Q(-a/\sigma) + (1-Q(-a/\sigma))\exp[-\frac{1}{2\sigma^2}(\sum_{n=0}^{N-1}(x[n]+s[n])^2 + \frac{1}{2\sigma^2}\sum_{n=0}^{N-1}(x[n]-s[n])^2] \qquad (14)$$

Prenant le logarithme, et un nouveau seuil t', on obtient :

$$T'(x,s) = \sum_{n=0}^{N-1} x[n]s[n] < t' \qquad (15)$$

La fonction de classification est donc un simple corrélateur T', dont la valeur doit être inférieure à un seuil t' pour classifier le signal comme copie.

Déterminons les statistiques de T' pour les deux hypothèses. Nous pouvons supposer que T' suit une gaussienne (vrai pour N élevé)dont nous nous dérivons les moyennes et variances pour les deux hypothèses :

$$E[T';H_0] = Na^2 \qquad (16)$$

$$E[T';H_1] = Q(-a/\sigma)Na^2 - (1-Q(-a/\sigma))Na^2 = (2Q(-a/\sigma)-1)Na^2 \qquad (17)$$

$$Var[T';H_0] = Na^2\sigma^2 \qquad (18)$$

$$Var[T';H_1] = N(a^2\sigma^2 + a^4Q(-a/\sigma)(1-Q(-a/\sigma))) \qquad (19)$$

Le deuxième terme de la variance pour l'hypothèse $H_1$, ($a^4Q(-a/\sigma)(1-Q(-a/\sigma))$), peut être éliminé si les copies viennent du même original. En pratique, le contrefacteur minimise son travail en n'utilisant qu'un original pour produire un grand nombre copies, il est raisonable d'éliminer le terme.

Dans le cas où les variances sont égales, on peut caractériser la performance de détection par le coefficient de déflection $d^2$, qui correspond à la différence entre les moyenne de la fonction T' pour les deux hypothèses, normalisée par la variance de T' :

$$d^2 = \frac{(E[T';H_0] - E[T';H_1])^2}{Var[T';H_0]} \qquad (22)$$

$$= \frac{2N^2 a^4 (1 - Q(-a/\sigma))^2}{Na^2 \sigma^2} \qquad (23)$$

$$= \frac{2Na^2 (1 - Q(-a/\sigma))^2}{\sigma^2} \qquad (24)$$

$$= 2N(\gamma(1 - Q(\gamma))^2 \qquad (25)$$

où $\gamma = a/\sigma$ est la racine carrée du rapport signal sur bruit.

La performance de détection croissant avec le coefficient de déflection, l'objectif est de déterminer la valeur de $\gamma$ maximisant l'expression $(\gamma(1-Q(\gamma)))^2$.

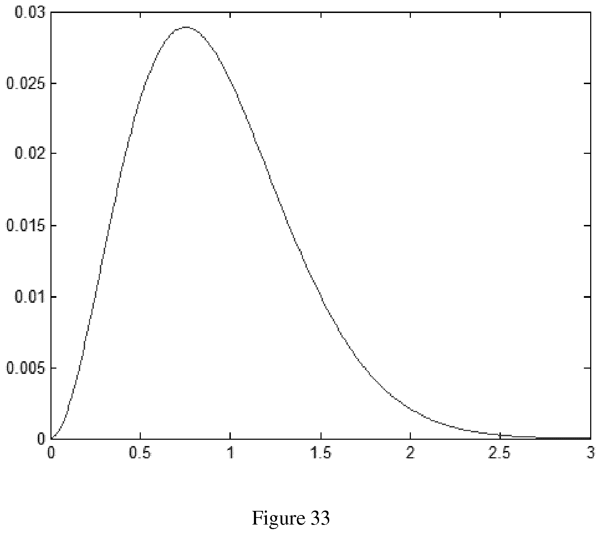

La Figure 33 représente la valeur de l'expression an fonction de $\gamma$. On peut l'interpréter comme suit. Les valeurs de $\gamma$ proche de zéro correspondent à un bruit très élevé par rapport au signal : lorsque le bruit est très élevé, le signal est trop dégradé dès la première impression, le contrefacteur introduit un nombre d'erreurs d'estimation trop faible. A l'inverse, pour des valeurs de $\gamma$ trop élevées, le signal n'est pas suffisamment dégradé, et dans une trop grande proportion des cas le contrefacteur n'introduira pas d'erreur d'estimation. Entre les deux extrêmes, l'expression passe par une valeur optimale, dont on estime numériquement la valeur à $\gamma \approx 0.752$.

Il est intéressant de noter que pour cette valeur, la probabilité que le contrefacteur n'ait pas déterminé correctement la valeur, est d'environ 22,6%.

En pratique, il s'agit d'obtenir un rapport signal sur bruit $\gamma^2$ aussi proche que possible de $0,752^2$, soit 0,565.

Prenons un exemple pour mieux comprendre comment viser cette valeur de rapport. Supposons que nous générons un MPCV avec deux tailles de point (exprimées en nombre de pixels) possibles, la taille de point étant de l'ordre de neuf pixels (par exemple, 3x3 pixels). On note que la taille de point peut être mesurée en mettant en oeuvre une multitude d'algorithmes, par exemple par seuillage adaptatif local du niveau de gris et dénombrement des pixels en dessous du seuil. On imprime un nombre suffisant de fois des points de neuf pixels. On mesure, dans une image capturée, la moyenne et l'écart-type du nombre de pixels de chaque point. Supposons qu'on obtient une moyenne de douze (on observe un gain physique moyen de 33 %), et un écart-type de quatre. Cet écart-type correspond à la valeur $\sigma$ décrivant le bruit dans les formules de notre modèle. On visera alors une valeur de notre signal $a$ de l'ordre de trois, pour obtenir un rapport $\gamma = 0.75$, soit très près de l'optimum. Pour obtenir cette valeur de signal, on peut par exemple définir deux tailles de points de quinze et de six pixels.

On décrit, ci-dessous, un algorithme possible d'optimisation des paramètres d'impression :

- au cours d'une étape 720, on reçoit la surface disponible pour le motif identifiant, par exemple un carré dont le côté mesure 1/6 de pouce,
- au cours d'une étape 721, on génère plusieurs images numériques de motifs identifiants de dimensions numériques différentes, correspondant aux différentes résolutions d'impression possibles, par exemple un motif identifiant de 66 x 66 pixels à 400 points par pouce, un de 100 x 100 pixels à 600 points par pouce, un de 133 x 133 pixels à 800 points par pouce , un de 200 x 200 pixels à 1200 points par pouce,
- au cours d'une étape 722, on imprime plusieurs fois chacun des motifs identifiants de dimensions numériques différentes, par exemple 100 fois, avec la résolution adéquate de façon à ce que les dimensions de l'impression correspondent à la surface disponible.
- au cours d'une étape 723, pour chaque type, on capture plusieurs fois chacun des motifs identifiants imprimés, par exemple 3 fois,
- au cours d'une étape 724, on calcule l'empreinte de chaque motif identifiant,
- au cours d'une étape 725, on calcule les scores de similarité pour toutes les paires de motif identifiant capturés de même résolution d'impression et

- au cours d'une étape 726, on suit la méthode décrite dans l'expérimentation de la méthode extraction d'empreinte générique exposée plus haut pour mesurer le « degré de séparation des empreintes », pour chacune des résolutions d'impression, et choisir la résolution d'impression donnant la valeur maximale de ce degré.

En variante, on imprime plusieurs matrices d'information sécurisées à différentes résolutions d'impression, et on détermine la résolution d'impression résultant en un taux d'erreur de 25 %, tel que calculé avec un des algorithmes décrits par ailleurs.

En variante, on choisit la résolution d'impression dont la différence est la plus élevée entre la plus basse valeur de score calculée sur la comparaison entre les empreintes correspondant à des impressions identiques, et la plus haute valeur de score calculée sur la comparaison entre les empreintes correspondant à des impressions différentes.

En ce qui concerne la méthode de représentation et stockage des caractéristiques, il est avantageux de réduire, autant que possible, le volume de données de l'empreinte. Dans le cas de l'identification, il s'agit de comparer une empreinte à un grand nombre d'empreintes stockées sur une base de données, ce qui est très coûteux. On réduit ce coût en réduisant la taille des empreintes à comparer, notamment en évitant d'utiliser des nombres en virgule flottante.

Prenons le cas de la méthode générique d'extraction d'empreinte. Le vecteur de données initial extrait d'un motif identifiant capté est la matrice de valeurs extraites 256 x 256, et sa représentation par une transformée en cosinus discrète après sélection de coefficients, possède 10 x 10 valeurs. Il est avantageux de représenter la matrice de valeurs avec un octet par valeur, soit 100 octets.

Au cours d'une étape 727, on imprime au moins un objet avec un motif identifiant pour former un document sécurisé.

Par contre, les coefficients de la transformée en cosinus discrète peuvent prendre des valeurs tant positives que négatives, et ne sont en principe pas limitées. Afin de représenter de telles valeurs avec une quantité d'information fixée, les valeurs doivent être quantifiées afin d'être représentées en valeurs binaires. Une approche possible est la suivante :

- au cours d'une étape 731, on détermine, à l'avance, une valeur minimale et une valeur maximale pour chaque coefficient. En général, les valeurs minimales et maximales ont la même valeur absolue,
- au cours d'une étape 732, on détermine le nombre de bits ou octets permettant de représenter chaque valeur et
- au cours d'une étape de normalisation 733, pour chaque coefficient de la transformée en cosinus discrète, on soustrait la valeur minimale, puis on divise le reste par la valeur maximale,
- au cours d'une étape 734, on multiplie le résultat par le nombre de valeurs possible des données quantifiées, soit 256 si un octet est disponible pour chaque valeur. La valeur entière du résultat correspondant à la valeur d'origine quantifiée.

En variante, les pas de quantifications sont optimisés de façon à minimiser l'erreur de quantification.

En ce qui concerne la méthode d'identification avec base de donnée, en cas d'identification, un motif identifiant doit être comparé à chacun des motifs identifiants d'une base de données, afin de déterminer s'il correspond à l'un des motifs identifiants de la base de donnée, auquel cas le motif identifiant est considéré valable, et les informations de traçabilité associées peuvent être retrouvées. Sinon, le motif identifiant est considéré comme non valable.

Dans des modes de réalisation, on met en oeuvre les étapes suivantes :

- au cours d'une étape 741, on détermine l'empreinte du motif identifiant contenu dans l'image captée,
- au cours d'une étape 742, on calcule le score, ou similarité, de l'empreinte obtenue avec chacune des empreintes stockées dans la base de données,
- au cours d'une étape 743, on détermine la similarité maximale obtenue,
- au cours d'une étape 744, si la similarité maximale est supérieure à une valeur seuil, le motif identifiant est jugé valide et, au cours d'une étape 745, on retrouve les informations de traçabilité associées,
- sinon, au cours d'une étape 746, le motif identifiant est jugé comme non-valide.

En variantes :

- au cours d'une étape 747, si le motif identifiant possède également les fonctionnalités d'un code numérique authentifiant, on extrait les informations de traçabilité,
- au cours d'une étape 748, les informations de traçabilité permettant de réduire l'espace de recherche peuvent également provenir d'une autre source, par exemple code barre associé, renseignement par le contrôleur, etc et
- au cours d'une étape 749, on exploite ces informations afin de réduire l'espace de recherche dans la base de données. Par exemple, l'information de l'ordre de fabrication permet d'effectuer une présélection des empreintes à comparer parmi le sous-ensemble d'empreintes correspondant à cet ordre de fabrication.

En ce qui concerne la méthode de vérification sans base de données, elle nécessite que l'empreinte précalculée du motif identifiant soit stockée sur le document. Par exemple, lors de l'étape du calcul de l'empreinte de chacun des documents légitimes, celles-ci peuvent être à la fois destinées à être stockées dans une base de données, et à être stockées de manière sécurisée sur le document.

Le stockage de l'empreinte sur le document est préférentiellement fait par impression variable, c'est-à-dire différente pour chaque document, à la volée. L'empreinte peut être stockée dans un code barre à une ou deux dimensions, ou encore dans un code numérique authentifiant, selon les moyens d'impression dont la qualité peut être limitée.

Il est, d'une manière générale, préférable de stocker l'empreinte de façon sécurisée, par exemple en utilisant un algorithme cryptographique muni d'une clé de chiffrement secrète. Ainsi, on évite le risque qu'un contrefacteur utilise des documents non-légitimes, sans avoir à se connecter à une base de données de référence. Pour cela, on met en oeuvre les étapes suivantes :

- au cours d'une étape 751, on détermine l'empreinte du motif identifiant contenu dans l'image captée,
- au cours d'une étape 752, on reçoit l'empreinte pré-calculée,
- au cours d'une étape 753, on calcule un score, ou une similarité, par comparaison de l'empreinte obtenue avec l'empreinte pré-calculée
- au cours d'une étape 754, si la similarité maximale est supérieure à une valeur seuil, le motif identifiant est jugé valide
- sinon, au cours d'une étape 756, le motif identifiant est jugé invalide.

En ce qui concerne un usage combiné d'un motif identifiant avec fonctionnalités d'un code numérique authentifiant, les méthodes de caractérisation unique des documents de l'art antérieur utilisent des caractéristiques non interprétables sans appel à une base de données. Par contre, si les motifs identifiants peuvent être de simples images sans significations, comme on l'a vu, ils peuvent également être des images comportant d'autres fonctionnalités. Notamment, ils peuvent être des codes numériques authentifiants, auquel cas ils peuvent comporter des informations sécurisées (une ou plusieurs clés sont nécessaires pour les lire), et/ou avoir des propriétés authentifiantes (distinguer un original d'une copie).

L'empreinte du motif identifiant peut être conçue de façon à être suffisamment précise pour identifier le document, mais pas suffisamment pour ne pas être reproductible. En effet, considérons la méthode générique de détermination de l'empreinte, basée sur 100 coefficients DCT de basses fréquences, possiblement représentés avec un octet chacun. N'importe qui peut, en principe, extraire ces coefficients, et créer une image de même dimension qu'un motif identifiant en inversant ces coefficients. Comme on le comprend, cette image est très différente des motifs identifiant imprimés. Pourtant, le score obtenu en comparant l'empreinte calculée à partir d'une capture de l'image inversée, et l'empreinte d'origine, est de 0,952. Ce score, bien qu'inférieur à l'ensemble des scores obtenus pour les comparaisons d'empreintes de mêmes motifs identifiants imprimés, est sensiblement supérieur aux scores obtenus pour des comparaisons d'empreintes de motifs identifiants imprimés différents. Il existe donc un risque qu'un contrefacteur cherche à reproduire l'empreinte d'un motif identifiant légitime.

Une meilleure capture d'image et/ou une capture d'image plus fine permettrait de réduire, voire d'éliminer le risque qu'une telle falsification fonctionne. Cependant, ce n'est pas toujours possible. Dans ce cas, si le motif identifiant est également un code numérique authentifiant, il est avantageux d'exploiter conjointement ses propriétés authentifiantes, en mettant en oeuvre les étapes suivantes :

- au cours d'une étape 761, on identifie ou on vérifie le motif identifiant,
- au cours d'une étape 762, on reçoit la ou les clés nécessaire(s) à l'authentification du code numérique authentifiant et
- au cours d'une étape 763, on détermine si le code numérique authentifiant est un original ou une copie.

Les codes numériques authentifiant se basent généralement sur la dégradation d'une ou plusieurs caractéristiques anti-copie physiques, qui sont sensibles à la copie lors de l'étape de copie.

Ainsi, les watermarks numériques ont un niveau d'énergie plus faible dans la copie, ou encore un rapport de niveau d'énergie différent entre un watermark peu sensible à la copie et un watermark particulièrement sensible à la copie. De même dans le cas des techniques de marquage spatial, on observe un niveau d'énergie, ou de corrélation, plus faible pour les copies. Pour les motifs de détection de copie, basés sur une comparaison d'image, on mesure un indice de similitude (ou de dissimilitude) entre le motif de détection de copie d'origine et le motif de détection de copie capturé ; si ce dernier est une copie, l'indice de similitude sera moins élevé. Finalement, pour les matrices d'information sécurisées, on mesure un taux d'erreur du message codé extrait de la matrice ; ce taux d'erreur sera plus élevé pour les copies (notons que, grâce aux redondances du message codé, le message envoyé est en général décodable sans erreur).

On observe que, pour chacune de ces méthodes, on mesure une ou plusieurs valeurs qui sont en général continues, et qui ne précisent pas explicitement la nature du document (original ou copie). On doit en général appliquer un critère prédéterminé de discrimination des originaux et des copies, par exemple en comparant la ou les valeurs obtenue(s) à une ou plusieurs valeurs « seuils », afin de déterminer si la ou les valeurs mesurées correspondent à une « copie » ou à un « original ».

En ce qui concerne les modes de réalisation du procédé de sécurisation de documents basés sur les motifs identifiants, les étapes suivantes peuvent être mises en oeuvre :

- au cours d'une étape 771, le titulaire des droits accorde une licence à un transformateur pour produire un certain nombre de documents,
- au cours d'une étape 772, le titulaire des droits transmet au transformateur un ou plusieurs motif(s) identifiant(s), ayant possiblement une fonctionnalité de code numérique authentifiant, sous la forme d'une image numérique à imprimer sur les documents. Le motif identifiant peut faire partie du design d'un document numérique, ou être envoyé séparément. En variante, le transformateur reçoit le motif identifiant d'un tiers parti mandaté par le détenteur de droit,
- au cours d'une étape 773, le transformateur imprime le nombre prévu de documents, avec le ou les motifs identifiants prévus sur chaque document,
- au cours d'une étape 774, le nombre prévu de documents imprimés est envoyé au détenteur de droit. En variante, les documents sont envoyés à l'assembleur mandaté par le titulaire des droits. En variante, le nombre prévu de documents imprimés est directement traité par le transformateur au cours de l'étape 774, comme exposé dans des variantes,
- au cours d'une étape 775, le titulaire des droits/l'assembleur assemble le produit fini (qui peut contenir plusieurs documents),
- au cours d'une étape 776, une ou plusieurs images de ou des motif(s) identifiant(s) est ou sont capturées. En principe, ce processus est fait automatiquement, les produits défilant par exemple sur un tapis roulant sous l'objectif d'une caméra industrielle. La caméra industrielle est déclenchée automatiquement ou par une activation externe venant d'un senseur,
- au cours d'une étape 777, chaque image capturée d'un motif identifiant est stockée sur une base de donnée, avec les informations associées (ordre de fabrication, date, etc.),
- au cours d'une étape 778, en temps réel ou différé, une ou plusieurs empreintes sont calculées pour chaque image valide de motif identifiant capturée,
- au cours d'une étape 779, dans le but éventuel de l'utilisation du motif identifiant en mode de vérification (sans connexion à la base de données), une des empreintes, généralement celle occupant le plus petit volume de donnée est quantifiée et/ou compressée de façon à obtenir une représentation compacte de celle-ci. Une matrice d'information (un datamatrix, un code à barres, une matrice d'information sécurisée MIS, etc.), préférentiellement sécurisée à l'aide d'une clé, est générée contenant la représentation de l'empreinte. La matrice d'information est imprimée sur le document contenant le motif identifiant et
- au cours d'une étape 780, si nécessaire, l'ensemble des empreintes calculées est envoyé, par lien sécurisé, au serveur central sur lequel les inspecteurs se connectent afin de vérifier la validité des empreintes.

En variantes :

- le site où sont capturées les images des motifs identifiant peut se trouver chez l'imprimeur ou le transformateur, l'avantage étant qu'il peut être intégré à la production, le désavantage étant qu'il est en zone exposée. La machine servant au calcul et ou/stockage des empreintes peut être sécurisée et/ou
- le site peut se trouver chez le tiers parti mandaté par le titulaire des droits, généralement le même qui fournit le ou les motifs identifiants utilisés.

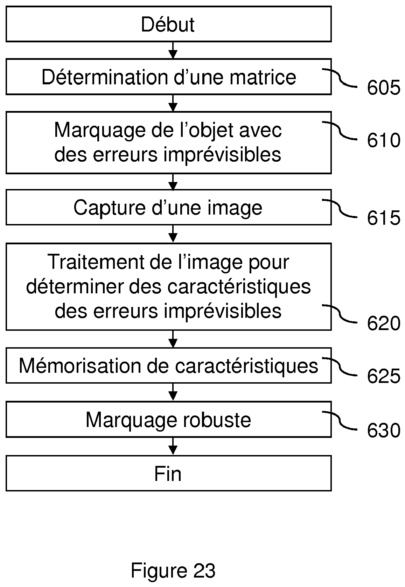

On observe, en figure 23 :

- une étape 605 de détermination d'une matrice de points représentative d'une information associée à un objet à authentifier,
- une étape 610 d'apposition d'une marque audit objet de telle manière que la marque apposée présente des erreurs imprévisibles du fait des caractéristiques physiques des moyens mis en oeuvre au cours de l'étape de marquage,
- une étape 615 de capture d'une image de ladite marque,
- une étape 620 de détermination de caractéristiques physiques desdites erreurs imprévisibles par traitement de ladite image,
- une étape 625 de mémorisation d'une information représentative des caractéristiques physiques des erreurs imprévisibles et
- une étape 630 de marquage robuste au cours de laquelle on appose audit objet une marque robuste comportant de l'information relative aux caractéristiques physiques des erreurs imprévisibles.

Au cours de l'étape 605, on détermine la matrice d'information, par exemple sous la forme d'une matrice de zones comportant, chacune, des centaines de points et représentatives, chacune d'une information binaire. L'information associée au produit est, par exemple, le nom de son fabricant, l'ordre de fabrication du produit et/ou la date de fabrication.

Au cours de l'étape 610, on appose la marque formée d'une matrice de points avec une résolution telle qu'au moins deux pour cent des points de la marque soient erronés, en comparaison avec la matrice de point originale. Par exemple, on utilise la résolution maximale d'une imprimante. Cette résolution a, notamment, pour effet, que la copie de l'objet, qui impose une copie de la marque, par exemple par des procédés optiques ou photographiques, augmente d'au moins cinquante pour cent le taux d'erreurs dans la marque copiée, en comparaison avec la marque initiale.

Au cours de l'étape 620, on détermine, comme caractéristiques physiques des erreurs imprévisibles, des caractéristiques de répartition desdites erreurs dans ladite marque Par exemple, on détermine le vecteur allant du centre de la marque au barycentre des erreurs portées par la marque, puis on affecte les erreurs d'un poids dépendant de leur position et on détermine un nouveau vecteur allant du centre de la marque au barycentre des erreurs et ainsi de suite.

Au cours de l'étape 630, la marque robuste est, par exemple un code à barres, en une ou en deux dimensions, ou une matrice de données connue sous le nom de Datamatrix (marque déposée). Du fait que cette deuxième marque est robuste, elle peut résister à des copies serviles et permettre d'identifier l'objet. Préférentiellement, au cours de l'étape 630, on met en oeuvre une clé de codage, préférentiellement asymétrique, des caractéristiques physiques des erreurs imprévisibles.

Grâce à la mise en oeuvre de la présente invention, bien que le même processus de marquage soit mis en oeuvre, sans modification, par exemple par gravure ou impression, sur de nombreux objets, les caractéristiques physiques des erreurs de marquage permettent de donner une identification unique à chaque marque et donc à chaque objet associé.

Lorsqu'une nouvelle capture d'image est effectuée avec un objet marqué et qu'un nouveau traitement d'image est appliqué, le résultat de ce traitement d'image peut être comparé à l'information mémorisée pour retrouver l'identification de l'objet.

La quantité d'erreur est importante et permet une identification unique de la marque et de l'objet.

La lecture des données relatives à l'objet qui porte la marque fournit une origine et/ou des moyens d'accès à une base de données de caractéristiques physiques des erreurs.

Quelles que soient les conditions de capture d'une nouvelle image de ladite marque, les caractéristiques de répartition des erreurs peuvent être retrouvées.

Pour la mise en oeuvre de certains modes de réalisation de la présente invention, l'inventeur a découvert que certaines caractéristiques de l'impression peuvent permettre de discerner les originaux des copies de manière très efficace. En particulier, la variation dans les dimensions, ou « taille », dans le positionnement précis ou dans la forme de points marqués peut être mesurée et intégrée dans une métrique permettant de discerner les originaux des copies. On note que la variation de niveau de couleur (ou niveau de gris) dans l'image à imprimer revient, du fait du tramage, à une variation de forme ou de dimensions. Les codes numériques authentifiants mentionnés précédemment ne sont pas conçus pour mesurer précisément ces caractéristiques. Au contraire, tous les codes numériques authentifiants de types connus ont des performances détériorées par les variations de positionnement dues à des aléas d'impression, variations qui sont perturbatrices pour les mesures utilisées. Au mieux, des méthodes sont utilisées pour chercher à les éliminer. Par ailleurs, les filigranes numériques et les MSMA sont conçus pour permettre de mesurer des caractéristiques globales du signal (énergie, par exemple) qui sont peu précises pour la différenciation entre les originaux et les copies.

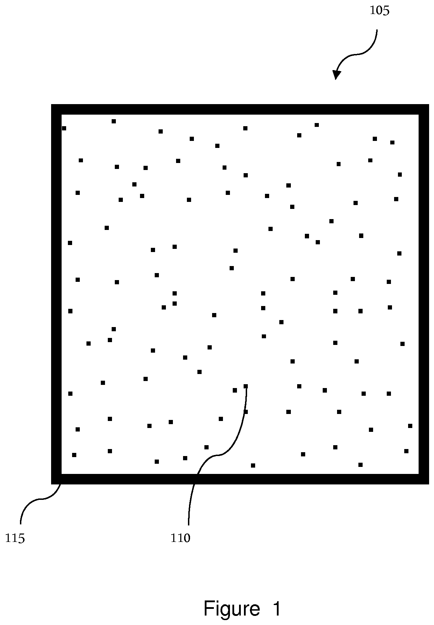

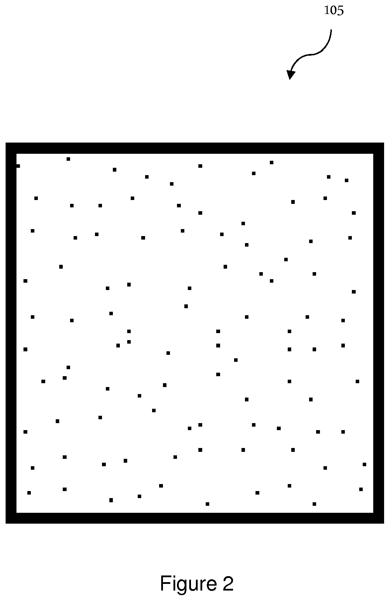

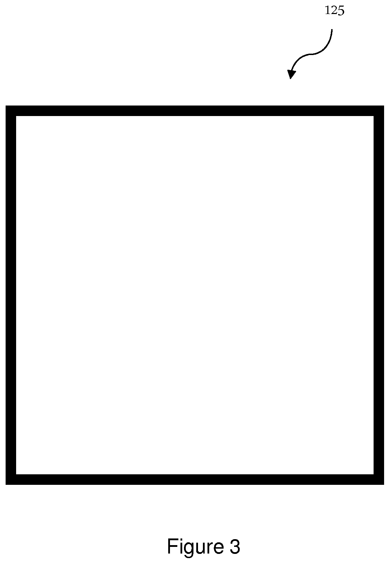

La figure 1 montre une marque numérique 105 composée d'un ensemble de points 110 aux positions aléatoires entourés d'une bordure noire 115. On note que les points 110 dans cette marque d'origine sont tous de la même taille, soit de 1 pixel pour une image imprimée à 600 pixels/pouce. La figure 2 montre une impression 120 de cette marque numérique. La figure 3 montre une photocopie 125 de cette marque. On constate que, dans la photocopie 125, les points 110 ont disparu. Avec une mesure simple telle que le nombre de points encore présents dans la marque dont une image est captée par un capteur d'image électronique, ou un degré de corrélation avec la marque de référence, il est aisé de discerner un original 120 d'une photocopie 125, ou d'une copie de faible qualité.

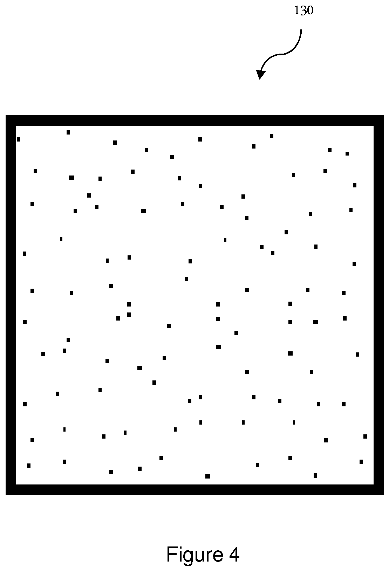

La figure 4 montre une copie 130 de haute qualité. Cette copie a été faite sur la base d'une capture d'image avec un scanner, capture communément appelée « scan », à haute résolution, en restituant à leur état d'origine les points 110 détectés automatiquement (en utilisant le logiciel Matlab, marque déposée, par exemple), sachant que ces derniers sont noirs et on la taille de 1/600ème de pouce. On observe que tous, sinon la plupart, des points 110 présents dans l'original en figure 2 sont présents en figure 4. La tâche d'un éventuel contrefacteur est, malheureusement, facilitée par le fait que, tous les points étant de la même taille à l'origine, il peut se permettre d'ignorer la mesure de la taille ou du niveau de gris des points, et simplement reconstituer les points à leur taille d'origine (qui, étant fixe, est triviale à déterminer sur un grand ensemble).

Préférentiellement, par la mise en oeuvre de certains aspects de la présente invention, le simple dénombrement des points présents ne suffit pas à discerner l'original de la copie. Une méthode basée sur la corrélation ou le niveau d'énergie telle qu'utilisée par les MSMA est également inefficace pour détecter les copies de bonne qualité.

A cet effet, dans des modes de réalisation préférentiels, pour élargir les possibilités d'utilisation des motifs de points, la détermination de l'authenticité d'un document impose de porter une attention particulière aux caractéristiques géométriques des points, qui sont étudiées au niveau local, contrairement aux méthodes de l'art antérieur. En particulier, la taille, la forme et/ou le positionnement exact des points sont utilisés pour la détection de copie, pour le stockage d'information, et/ou pour la caractérisation unitaire des documents. Les MPCV objets de modes de réalisation particuliers de la présente invention présentent ainsi la particularité que la taille, la forme et/ou le positionnement exact des points sont variables. Préférentiellement, pour la génération de la distribution de points dans ce MPCV, on produit des points dont au moins une caractéristique géométrique est variable, l'amplitude géométrique de la variation générée étant de l'ordre de grandeur de la variation géométrique imprévisible des points lors de l'impression, connue/mesurée pour le système d'impression.

La description qui va suivre concerne :

- des méthodes de conception numériques des MPCV,
- des méthodes de mesures de caractéristiques géométriques des MPCV,
- des méthodes de combinaisons de caractéristiques géométriques mesurées des MPCV en une métrique permettant de discerner les MPCV originaux des MPCV copiés,
- des méthodes d'optimisation de l'impression des MPCV,
- des méthodes d'identification des MPCV sur la base de leurs caractéristiques géométriques,
- des méthodes de vérification de MPCV,
- des méthodes de stockage d'information dans les MPCV et
- un procédé de sécurisation de documents.

On décrit d'abord, ci-après, une méthode de génération d'un motif de points à caractéristiques variables. Afin de générer un MPCV, on détermine, au préalable, la qualité d'impression du système d'impression qui sera utilisé pour imprimer le MPCV sur le document, au cours d'une étape 300. La qualité d'impression est représentative d'une variation imprévisible d'au moins une caractéristique géométrique des points imprimés, point par point, provoquée par l'impression, du fait d'aléas d'impression.

Puis on détermine la surface à disposition pour l'impression de ce MPCV, de résolution du système d'impression et la densité maximale des points souhaitée, au cours d'une étape 302. Par exemple, la taille disponible peut être d'environ 1/6 x 1/6 pouce, et la densité de 1/100 (environ un pixel sur 100 peut être imprimé). La densité maximale dépend du degré de visibilité accepté du MPCV, qui est fonction des conditions de l'application (couleur de l'encre, support, type d'impression, esthétique du document, par exemple). La densité peut être plus élevée, par exemple une densité de 1/16 ou 1/9 sont possibles, voire de 1/4. Préférentiellement, le MPCV est généré de sorte que les points imprimés ne se « touchent » pas.

Dans certains cas, la taille disponible peut être beaucoup plus importante, par exemple de plusieurs pouces carrés. En revanche, la plupart des moyens de capture, par exemple les appareils photo comportant un capteur d'image matriciel, offrent une surface de capture ne permettant pas de couvrir cette zone (les scanners à plats ne sont en général pas disponibles lorsque des documents ou produits doivent être lus sur le « terrain »). Dans ce cas, on peut « tuiler », c'est-à-dire juxtaposer à l'identique, le MPCV ou juxtaposer des MPCV, différents pour des raisons de sécurité. Dans la suite de la description, on appelle « tuilage » ces deux types de juxtaposition de MPCV, respectivement identique ou différents.

En faisant l'hypothèse que l'outil de capture peut être appliqué arbitrairement sur la zone d'impression, la taille maximale du MPCV pour garantir qu'au moins un MPCV sera intégralement contenu dans la surface de capture est égale à la moitié du plus petit côté de la surface de capture. Pour l'exemple cité plus haut d'un CCD de 640 x 480 opérant à 1220 points/pouces (surface de 1,33 cm sur 1 cm), le MPCV ne devra pas dépasser 0,5 centimètres de côté.

Le MPCV est généré, par la suite, de telle manière que :

- au moins la moitié des points de ladite distribution ne soit pas juxtaposés latéralement à quatre autres points de ladite distribution de points, et
- au moins une variation de dimension d'au moins une partie des points de ladite distribution de points est du même ordre de grandeur que la moyenne de la valeur absolue de la variation imprévisible.

Les inventeurs ont, en effet, découvert que l'impression de l'original doit présenter un tel rapport d'ordres de grandeur pour obtenir une meilleure efficacité des fonctions de sécurisation (authentification et identification) du document.

De plus, les inventeurs ont découverts que, dans certains modes de réalisation, pour sécuriser un document contre des copies provoquant, du fait d'aléas de copie, une variation dite « de copie » imprévisible, point par point, d'au moins une caractéristique géométrique des points imprimés, il est préférable qu'au cours de l'impression d'une distribution de points sur le document, ladite impression provoque, du fait d'aléas d'impression, une variation, dite « d'impression » imprévisible, point par point, de ladite caractéristique géométrique des points imprimés, l'amplitude moyenne de la variation imprévisible d'impression étant du même ordre de grandeur que l'amplitude moyenne minimale de la variation imprévisible des dites copies. Préférentiellement, on effectue alors une étape de détermination d'une grandeur physique représentative de la variation imprévisible d'impression, comme exposé par ailleurs en regard des fonctions d'authentification et d'identification d'un document.

Par exemple, on peut utiliser un MPCV de 200 x 200 pixels imprimé à 1 200 points par pouce, pour une surface imprimé de 1/6 pouce, dont les « points » mesurent 2x2 pixels de génération lorsque la moyenne de la valeur absolue de la variation imprévisible est entre 0,2 pixel et 20 pixels. Notons qu'un MPCV de 100 x 100 pixels imprimé à 600 points par pouce, avec des points de 1 x 1 pixel donnerait un résultat comparable. Cependant, une résolution d'image plus élevée (pour une même taille de zone imprimée) permet davantage de flexibilité pour faire varier la taille et/ou la position des points, comme on le détaille par la suite.

Préférentiellement, on évite que des points soient superposés, collés, ou trop proches. A cet effet, on divise le MPCV en zones adjacentes, par exemples en 10 x 10 zones de 20 x 20 pixels chacune, pour un MPCV de 200 x 200 pixels. En laissant une marge blanche de 1 pixel sur chacun des bords de chaque zone, on a une zone de 18 x 18 pixels disponible pour le point. Il y a alors 17 x 17 = 289 positions possibles pour chaque point dans la zone qui lui est réservée (les points faisant 2 x 2 pixels, leur point le plus en haut et le plus à gauche, par exemple, ne peut prendre que 17 positions latérales et 17 positions longitudinales).

Pour des raisons de sécurité, il est souhaitable que le MPCV soit de nature pseudo-aléatoire, par exemple généré à partir d'un algorithme cryptographique auquel on fournit une clé tenue secrète. Cette clé est utilisée comme valeur d'initialisation d'un algorithme générant des nombres pseudo-aléatoires, qui peuvent être retrouvés par quiconque connaît la clé, mais qui sont très difficiles à trouver par quiconque ne possédant pas la clé.

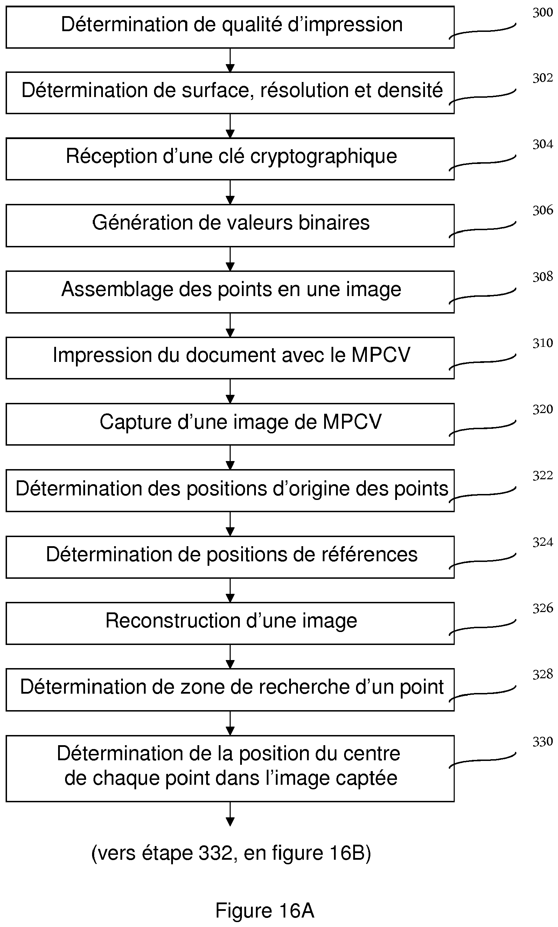

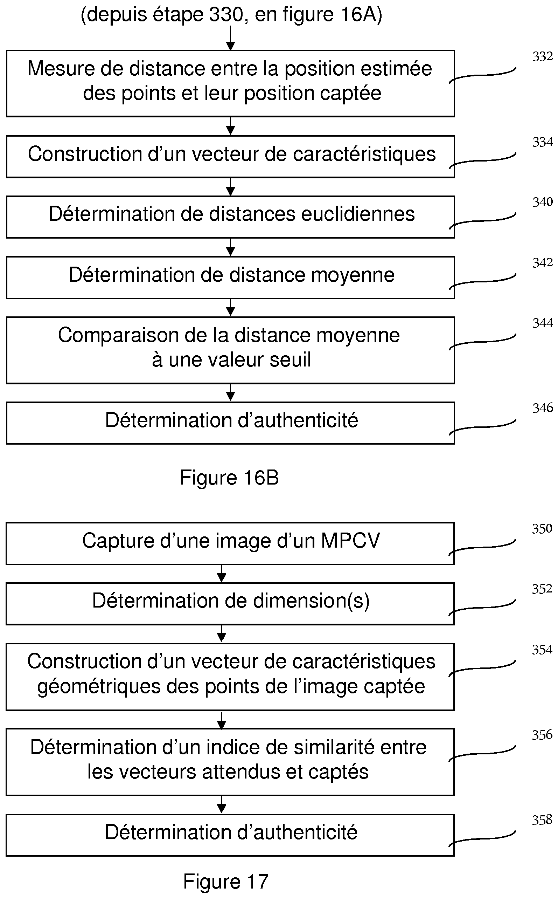

Comme on l'observe en figure 16A, pour générer un MPCV, on réalise :

- une étape 302 de réception ou de détermination de surface disponible, et de résolution de système d'impression et de densité d'impression,
- une étape 304 de réception d'une clé cryptographique, par exemple une séquence de 32 octets (256 bits),
- une étape 306 de génération de valeurs binaires, par exemple en utilisant une fonction de hachage ou de chiffrement de manière récursive, l'algorithme étant initialisé avec la clé cryptographique. Par exemple, pour l'exemple mentionné ci-haut, il y a 289 positions possibles pour le point, et il faut donc 9 bits pour déterminer la position d'un point dans la zone qui lui est réservée. Ainsi, il faut 900 bits pour déterminer les positions des 100 points dans leurs zones respectives. En supposant que la fonction de hachage SHA-1 soit utilisée, avec des entrée et sortie de 256 bits, il faut faire quatre appels à la fonction pour obtenir les données binaires nécessaires et
- une étape 308 d'incorporation d'un point dans chaque cellule et d'assemblage des cellules en une image, ici de taille 200 x 200 pixels. Par exemple, au cours de cette étape 308, on utilise des séquences de neufs bits successives, pour déterminer la position d'un point dans chaque cellule. Lorsque la valeur représentée par cette séquence est supérieure à 289, on prend la séquence suivante. Sinon, on positionne le point à la position repérée par la séquence, par exemple en numérotant les positions successivement dans chaque ligne de positions possibles. Puis on juxtapose les cellules, par exemple successivement dans chaque ligne de cellules.

A la suite de l'étape 308, on incorpore le MPCV dans les films d'impression et on imprime le document, au cours d'une étape 310.

Dans des variantes, chaque point peut avoir une taille variable. Par exemple, les points peuvent avoir une surface supérieure ou inférieure à 2 x 2 pixels. Ainsi, les points peuvent avoir plusieurs des tailles offrant la possibilité de mesurer d'autres caractéristiques géométriques difficilement reproductibles par le contrefacteur. Par exemple, les points peuvent avoir deux tailles possibles, soit de 2 x 2 pixels comme donné précédemment, soit de 3 x 3 pixels, des dimensions verticales et horizontales inégales, par exemple 2 x 3 ou 3 x 2, étant également possibles. Notons que, dans le cas de deux points carrés, il faut une donnée binaire supplémentaire pour identifier la taille du point, donnée qui s'ajoute aux neuf données binaires qui identifient la position du point dans la zone qui lui est réservée. Ainsi, il faut dix données binaires par zone, et 1000 données binaires pour les 100 cellules.

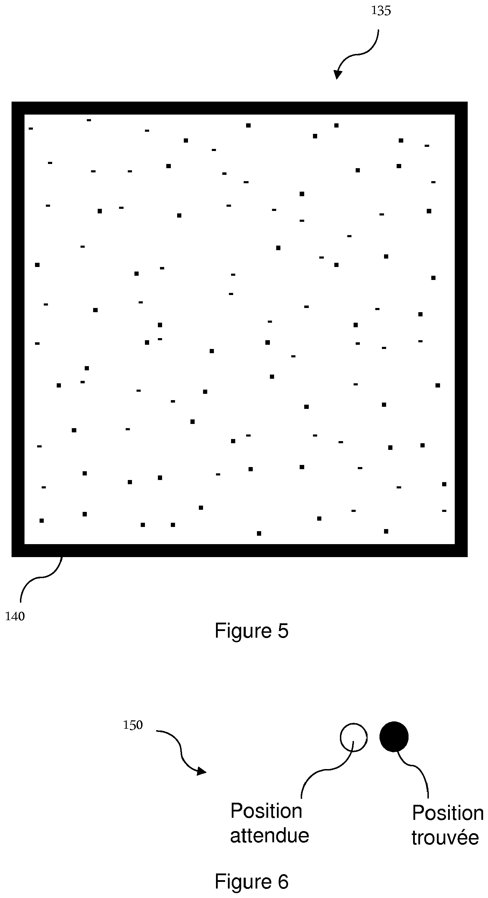

La figure 5 montre un MPCV 135 avec des points dont les dimensions varient pseudo-aléatoirement (points de 2 x 2 et 3 x 3 pixels) et une bordure 140 entourant le MPCV 135. La figure 6 montre un détail du résultat 145 de l'impression du MPCV 135 de la figure 5.

On note que, dans des variantes, on ajoute une bordure, ici 140, ou des formes arbitraires permettant la localisation du MPCV. Par exemple, des blocs de synchronisation sont ajoutés sur les bordures ou dans le MPCV, à la place de zones contenant des points.

En ce qui concerne les mesures des caractéristiques de positionnement d'un MPCV, l'inventeur a découvert que, si les points composant un MPCV peuvent être déterminées et reconstituées avec une quasi-certitude par un contrefacteur, ce dernier peut très difficilement réduire l'incertitude sur le positionnement précis des points. En effet, lors de l'impression d'un MPCV, les points ne seront pas nécessairement imprimés à leur position exacte : cette incertitude est due aux aléas de l'impression, et elle est également causée par le passage du numérique à l'analogique. En effet, en passant de valeurs numériques à des valeurs analogiques lors de l'impression, puis de nouveau à des valeurs numériques lors de la capture d'image, on a une incertitude moyenne de l'ordre du demi pixel, (pixels respectivement d'impression et de capture d'image) dans le positionnement des points, la deuxième incertitude étant indépendante des incertitudes de positionnement dues aux aléas de l'impression. Notons qu'en fonction de la stabilité du moyen d'impression, des incertitudes de positionnement additionnelles peuvent être ajoutées. Lors de la production d'une copie de haute qualité, des incertitudes de positionnement additionnelles de ré-impression, s'ajoutent aux incertitudes de positionnement déjà présentes. Ainsi, l'écart entre la position d'un point dans l'image captée et le positionnement de ce point dans l'image d'origine est, en moyenne, plus élevée si l'image captée est une copie que s'il s'agit d'un original.

On décrit, ci-après, un algorithme de mesure des caractéristiques géométriques de positionnement d'un MPCV. En entrée, on utilise une image captée, au cours d'une étape 320, d'une zone de document contenant un MPCV et une clé cryptographique. En sortie des étapes implémentant cet algorithme, on obtient un vecteur de caractéristiques de positionnement des points du MPCV.

- en appliquant l'algorithme de conception des MPCV, on détermine les positions d'origine de chacun des points, au cours d'une étape 322 ;
- au cours d'une étape 324, on détermine la position d'un ensemble de formes de référence de position dans l'image capturée, étant entendu que le MPCV lui-même, ou une partie de celui-ci, peut servir de forme de référence, puisqu'il est connu. Par exemple, ces cellules de références peuvent être des indicateurs de coins, la bordure d'un carré. On peut également utiliser d'autres techniques connues de détermination de position, telles que l'autocorrélation d'images tuilées.
- à partir des formes de référence, on reconstruit une image de taille égale ou multiple entier de la taille d'origine, au cours d'une étape 326 ;
- pour chaque cellule, on détermine, au cours d'une étape 328, une zone de recherche dans l'image captée dans laquelle l'image du point doit se trouver (Par exemple, si le MPCV est imprimé à 600 ppi (acronyme de « points par pouce ») et est capturé à 1 200 dpi (acronyme de « dip per inch » signifiant pixel de capture par pouce), une zone de +/- 5 pixels correspond à une zone de +/- 2,5 pixels dans l'image d'origine). Une zone de recherche relativement grande est nécessaire car le positionnement initial des cellules de référence peut être imprécis ;
- si le point est de couleur sombre sur fond clair, on détermine, au cours d'une étape 330, la position dans l'image reconstruite, ou dans l'image captée, du pixel ayant la valeur minimale de luminance dans la zone définie et si le point est de couleur clair sur fond sombre, on détermine, au cours de l'étape 330, la position dans l'image reconstruite, ou dans l'image captée, du pixel ayant la valeur maximale de luminance dans la zone définie. Cette position d'un pixel est considérée comme la position du centre du point dans l'image captée ;
- on mesure les distances, dans chaque direction, entre les deux positions, au cours d'une étape 332 et
- on compile l'ensemble des mesures de distances en un vecteur de caractéristiques géométriques, au cours d'une étape 334.

Pour un MPCV de 100 cellules, on obtient ainsi un vecteur de taille 100 x 2. A cause des imprécisions dans le positionnement des cellules de référence, un biais systématique peut exister. Préférentiellement, au cours de l'étape 332, on compense ce biais en calculant les moyennes des distances horizontales et verticales et on soustrait cette moyenne des distances correspondantes (on s'attend, en effet, à une moyenne nulle pour les imprécisions de positionnement).

En variantes :

- on utilise d'autres valeurs caractéristiques de chaque point pour déterminer sa position. Par exemple, la valeur de luminance du pixel central du point, la valeur de réponse à un filtre de points correspondant à des pixels, etc, et/ou
- on détermine les positions des points sans reconstruire l'image, en tenant compte du facteur d'échelle dans l'image capturée, ainsi que de la rotation et de la translation de celle-ci, dans la détermination des zones de recherches pour la position précise de chaque point.

En ce qui concerne la discrimination, ou le discernement entre les MPCV originaux et les MPCV copiés mettant en oeuvre le vecteur de caractéristiques de positions, on peut procéder de la manière suivante :

- pour chaque point, on calcule la distance euclidienne entre la position du point estimée d'après l'image captée et la position d'origine, au cours d'une étape 340,
- au cours d'une étape 342, on calcule la moyenne, ou la médiane, de cette distance sur l'ensemble des points, pour obtenir une mesure de la distance moyenne,

- au cours d'une étape 344, on compare cette distance moyenne à un seuil prédéterminé et,
- au cours d'une étape 346, on détermine si le MPCV est un original ou une copie, de la manière suivante :

 - si la distance moyenne est inférieure au seuil, on considère le MPCV comme original,
 - sinon, il est considéré comme une copie.

L'exemple suivant illustre la méthode proposée. Le même MPCV d'origine a été imprimé puis capté trois fois. Les distances moyennes calculées sur les vecteurs de caractéristiques de positions des originaux sont de 0,454, 0,514 et 0,503 pixels d'image. Trois copies de haute qualité ont été faites, chacune à partir d'un des trois MPCV imprimés. Les distances moyennes calculées sur les vecteurs de caractéristiques de position de ces copies sont de 0,965, 1,088 et 0,929 pixels d'image. On constate que, sur la base de la distance moyenne, les MPCV originaux peuvent aisément être séparés des MPCV copiés par simple seuillage. Plusieurs valeurs de seuil sont possibles, selon le coût relatif aux erreurs possibles (« faux positif » : détecter une copie comme un original, ou « faux négatif » : détecter un original comme copie). Un seuil de 0,75 pixels (d'image) peut être un compromis acceptable si les coûts relatifs à chaque type d'erreur sont équivalents.

D'autres techniques mathématiques connues, par exemple basées sur des méthodes statistiques et/ou de reconnaissance de formes, peuvent être utilisées afin de discerner les MPCV originaux des MPCV copiés.

En ce qui concerne la discrimination, ou le discernement, entre les MPCV originaux et les MPCV copiés à partir des valeurs de caractéristiques géométriques des points, comme on l'a observé plus haut, si les points ont une taille constante, il est aisé pour le contrefacteur de les reproduire avec une taille conforme, même si les points peuvent apparaître avec une taille variable dans la marque d'origine. Dans un mode de réalisation, au cours de la génération du MPCV, on fait varier une ou deux dimensions des points.

Lors de l'analyse de l'authenticité d'un document, après avoir capté une image du MPCV, au cours d'une étape 350, on détermine la ou les dimensions des points en fonction du degré de luminance de leur pixel d'image central, leur réponse à au moins un filtre matriciel correspondant à des pixels d'image, etc, au cours d'une étape 352.

Puis, on discerne les MPCV originaux des copies en fonction du degré de similarité entre les dimensions des points du MPCV numérique d'origine et des dimensions des points correspondants dans l'image captée du MPCV à authentifier. Par exemple, on procède de la manière suivante :

- au cours d'une étape 354, en appliquant l'algorithme de conception des MPCV, on détermine un vecteur de caractéristiques de dimensions attendues. Par exemple, le vecteur de caractéristiques attendues peut être la valeur de surface des points ou leurs deux dimensions, horizontale et verticale ;
- au cours d'une étape 356, on calcule un indice de similarité, par exemple un coefficient de corrélation, entre le vecteur de caractéristiques attendues et le vecteur de caractéristiques obtenus après traitement de l'image captée du MPCV et
- au cours d'une étape 358, on détermine si le MPCV est authentique, en comparant l'indice de similarité avec une valeur seuil prédéterminée :

 - si la valeur de l'indice est supérieure au seuil, le MPCV est considérée comme original et
 - sinon il est considéré comme une copie.

L'exemple suivant illustre la méthode proposée. Le même MPCV d'origine, illustré en figure 5, dont les dimensions des points varient entre 2 x 2 pixels et 3 x 3 pixels a été imprimé puis capté trois fois. Le vecteur de caractéristiques est composé de valeurs de surface de 4 et 9 pixels pour les tailles de points de 2 x 2 pixels et 3 x 3 pixels. Les vecteurs de caractéristiques contiennent la valeur moyenne de luminance d'une région entourant le point, moins la valeur de luminance du point. On a ainsi une valeur plus élevée si le point est plus fortement imprimé, ce qui est en général le cas pour les points de 3 x 3 pixels.

Les indices de similarité calculés sont, pour les trois impressions originales, de 0,654, 0,673 et 0,701. Puis, trois copies de haute qualité ont été faites, chacune à partir d'un des trois MPCV imprimés. Pour faire les copies, on a déterminé les positions des points, puis on a mesuré leur degré de luminance. Le degré de luminance médian des points du MPCV a été calculé, et les points ayant une luminance inférieure au degré de luminance médian ont été considérés comme étant de taille de 3 x 3 pixels à l'origine, contre une taille de 2 x 2 pixels pour les points ayant un degré de luminance supérieur au degré de luminance médian. Les copies ont été imprimées et capturées. Les indices de similarité calculés sont, pour les trois copies, de 0,451, 0,423 et 0,446. On constate que, sur la base des caractéristiques des points, les MPCV originaux peuvent aisément être séparés des MPCV copiés par simple seuillage. Plusieurs valeurs de seuil sont possibles, selon le coût relatif aux erreurs possibles. Un seuil pour l'indice de similarité de 0,55 est un compromis acceptable si les coûts relatifs à chaque type d'erreur sont équivalents.

D'autres techniques mathématiques connues, par exemple basées sur des méthodes statistiques et/ou de reconnaissance de formes, peuvent être utilisées afin de discerner les MPCV originaux des MPCV copiés.

La description donnée ci-dessus concerne essentiellement la sécurisation d'un document contre la copie. Dans la suite de la description, on s'intéresse à deux autres formes de sécurisation d'un document, d'une part, pour identifie de manière unique des documents qui n'ont pas été imprimés par un procédé d'impression « variable » et, d'autre part, pour véhiculer une information concernant le document, par exemple un numéro de référence, sa date, son lieu et son ordre de fabrication, le nom du propriétaire des droits de propriété intellectuels attachés au document ou sa destination.

On décrit, ci-dessous, des méthodes d'identification des MPCV sur la base de leurs caractéristiques géométriques. Il s'agit, ici, d'utiliser des caractéristiques mesurées des MPCV pour identifier, de manière unique, chacune des impressions d'une même image numérique source de MPCV. En effet, chaque impression d'un MPCV produit des aléas d'impressions uniques, qui peuvent être retrouvés sur différentes captures de la même impression. Ainsi, en stockant dans une base de donnée les caractéristiques des impressions successives d'un MPCV, ou en les stockant de manière préférablement sécurisée sur le document contenant le MPCV (par exemple dans un code à barres 2D), on peut ultérieurement identifier une impression d'un MPCV et donc un document imprimé la portant, c'est-à-dire reconnaître de manière unique, en recherchant la correspondance entre les caractéristiques géométriques du MPCV dont une image est captée et les caractéristiques géométriques stockées.

Préférentiellement, l'identification et l'authentification sont combinées, le même dispositif de capture et de traitement d'image fournissant à la fois une indication d'authenticité du document et d'identification du document.

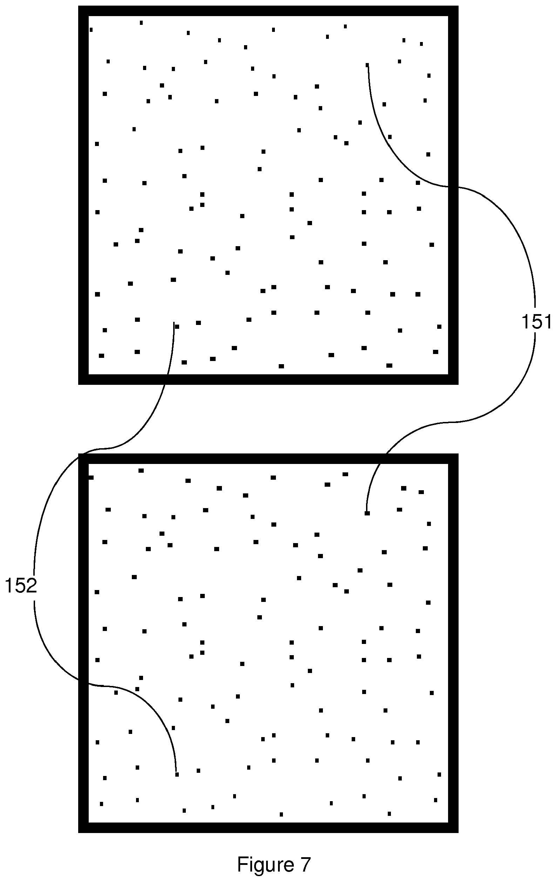

Plusieurs caractéristiques géométriques des points peuvent être utilisées, tel que le positionnement précis, ou la mesure de la luminance, la ou les dimensions des points et leur forme. Le degré de luminance, mesuré par le niveau de gris moyen, central ou minimum du point, est particulièrement discriminant, car il varie significativement et de manière imprévisible sur différentes impressions d'une même image source. On note qu'il n'est pas nécessaire d'utiliser des points de taille ou forme variable dans le MPCV source pour que les caractéristiques des points varient d'une impression à l'autre. Afin d'illustrer ce propos, la figure 7 montre deux impressions d'un même MPCV ayant une taille de points constante : un point 151 est imprimé plus fortement sur l'image du bas que sur l'image du haut, alors qu'un point 152 est imprimé plus fortement sur l'image du haut que sur l'image du bas.

En capturant trois fois chacun de trois MPCV imprimés, on obtient un total de neuf images capturées. On calcule le vecteur de caractéristiques contenant la valeur de luminance minimale des points pour chacune des neuf captures d'images. Puis, on calcule un indice de similarité, c'est-à-dire un coefficient de corrélation, entre les vecteurs de caractéristiques de chacun des 9*8/2=36 couples possibles d'images capturées. Sur ces 36 couples, 9 correspondent à différentes captures d'une même impression, et 25 à des captures d'impressions différentes. La moyenne de l'indice de similarité est de 0,9566 avec un écart-type de 0,0073 et une valeur minimale de 0,9474 pour le premier groupe, et de 0,6203 avec un écart-type de 0,0272 et une valeur maximale de 0,6679 pour le second groupe. La différence de l'indice de similarité entre les deux groupes est très significative, et montre qu'un MPCV imprimé peut être identifié sans ambiguïté sur la base d'un vecteur de caractéristiques de points.

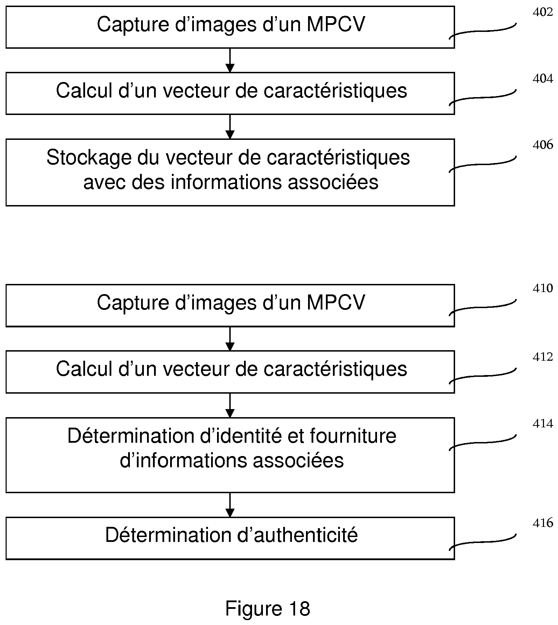

La figure 18 détaille des étapes d'un procédé d'identification correspondant à cette démarche. Au cours d'une étape 402, on capture une image d'un MPCV imprimés. Puis, au cours d'une étape 404, on calcule le vecteur de caractéristiques contenant les valeurs moyennes de luminance minimale des points. Ce vecteur de caractéristiques, ou « signature » du MPCV imprimé, contient, pour chaque point, la luminance moyenne mesure et, éventuellement, l'écart-type entre les mesures de luminance. On observe que certaines mesures de luminance peuvent être exclues sur la base de leur différence avec la moyenne des autres mesures et de l'écart-type entre les autres mesures. Puis, au cours d'une étape 406, on stocke le vecteur de caractéristiques, dans une base de données, avec des indications concernant la production et/ou la circulation du document.

Lors d'une tentative d'identification, au cours d'une étape 410, on capture une image d'un MPCV imprimés. Puis, au cours d'une étape 412, on calcule le vecteur de caractéristiques correspondant au vecteur de caractéristiques stocké. Au cours d'une étape 414, on détermine le vecteur de caractéristiques stocké le plus proche du vecteur de caractéristiques calculé au cours de l'étape 412 et on retrouve les informations associées.

En variante, on stocke aussi le vecteur de caractéristiques déterminé au cours de l'étape 404 sur le document lui-même, de manière robuste, c'est-à-dire résistant à la copie, par exemple dans un code à barres en deux dimensions ou dans un Datamatrix (marque déposée), préférablement chiffré pour des raisons de sécurité. Dans ce cas, on peut authentifier le document en comparant un indice de similarité entre les deux vecteurs de caractéristiques et une valeur de seuil prédéterminée ou stockée, elle-aussi, dans le code à barre, au cours d'une étape 416.

Afin de stocker de l'information dans les MPCV, on peut par exemple définir deux positions, deux dimensions ou deux formes possibles pour chacun des points, à l'intérieur de la cellule qui lui est attribuée, afin de stocker un bit par zone. On assigne une valeur de bit (« 0 » ou « 1 ») à chacune des positions, dimension ou forme.

En référence à la figure 5, qui illustre un MPCV avec deux tailles de points, les points de petite taille (2x2 pixels) peuvent, par exemple, représenter la valeur de bit « 0 », et les points de grande taille (3x3 pixels) peuvent représenter la valeur de bit « 1 ».

Pour un MPCV à 100 cellules, on peut ainsi stocker 100 bits sans redondance. Afin de détecter et/ou corriger les erreurs, l'utilisation d'un code détecteur et/ou correcteur d'erreur est souhaitable.

Dans le cas de l'utilisation de la position pour représenter une valeur binaire, il est préférable que les positions correspondant à chacune des deux valeurs soient éloignées l'une de l'autre. Une méthode possible pour garantir l'éloignement des deux positions consiste à séparer une cellule en deux parties de taille égale correspondant aux deux valeurs de bit, et d'attribuer une position de manière pseudo-aléatoire dans la zone correspondant à la valeur de bit à coder. On observe que la position d'un point dans une cellule peut représenter plus d'une valeur binaire, du fait de la multiplicité des positions possibles. Par exemple, comme on l'a vu ci-dessus, cette position peut représenter 8 bits sur 289 positions différentes ou 6 bits si on exclut une position sur deux dans chaque direction, pour limiter le risque d'erreur d'interprétation de position lors de la lecture.

A la lecture du MPCV, on détermine une zone de recherche autour des deux positions possibles d'un point pour chaque sous-cellule. Pour déterminer laquelle des deux sous-cellules contient le point, on détermine la valeur de luminance minimale pour chacune des deux sous-cellules : la zone ayant la plus basse valeur de luminance est considérée comme celle où le point a été insérée. En variante, on peut assigner un poids pour chaque valeur de bit, en fonction de la différence ou du ratio de luminance entre chacune des deux sous-cellules.

En variantes :

- on utilise la présence ou l'absence du point dans la cellule afin de représenter un bit d'information (utilisé plus loin dans les « grilles ») ;
- on représente plus d'une valeur binaire par plus de deux positions possibles d'un point par cellule ;
- on représente plus d'une valeur binaire par plus de deux dimensions possibles d'un point par cellule ;
- on représente plus d'une valeur binaire par plus de deux formes possibles d'un point par cellule et/ou
- on chiffre le message avant de l'encoder.

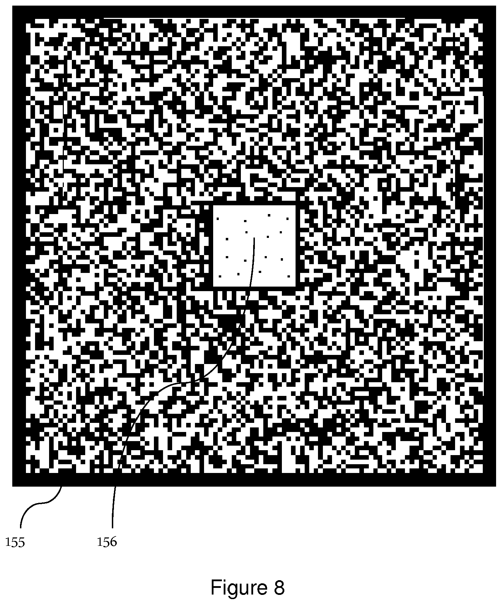

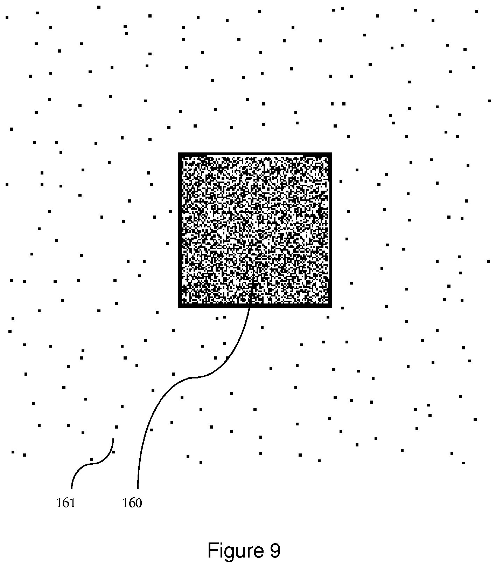

En ce qui concerne l'intégration avec d'autres codes numériques authentifiants, les MPCV peuvent être intégrés avec d'autres codes numériques authentifiants, afin d'offrir une couche de protection supplémentaire et/ou un moyen discret de tracer les documents. La figure 8 montre une matrice d'information sécurisée 155 qui comporte, en son centre, une zone dans laquelle est inséré un MPCV 156. La figure 9 montre une matrice d'information sécurisée 160 qui est entourée d'un MPCV 161. On note que, dans ce dernier cas, les éléments permettant de localiser le code numérique authentifiant 160, par exemple ses coins, peuvent être utilisés afin de localiser et déterminer les positions approximatives des points du MPCV 161.

Dans des modes de réalisation, on met en oeuvre des moyens de repérage du MPCV par des marques discrètes. En effet, dans certains cas, il peut être souhaitable que les marques de repérages soient plus discrètes qu'une bordure, afin que la position, voire la présence, d'un MPCV soit difficilement détectable : par exemple, on peut insérer des marques de bordure limitées, discontinues ou des marques de coins, ou encore se repérer par un code numérique authentifiant ou d'autres symboles associés.

Si le même motif de points est répété plusieurs fois, par exemple par tuilage, le repérage et la localisation des points peut se faire avec des techniques d'auto-corrélation et de corrélation croisée, tel que celle décrite dans l'article de M. Kutter. "Watermarking resisting to translation, rotation and scaling.", Proc. of SPIE: Multimedia systems and applications, Volume 3528, pp.423-431, Boston, USA, November, 1998.

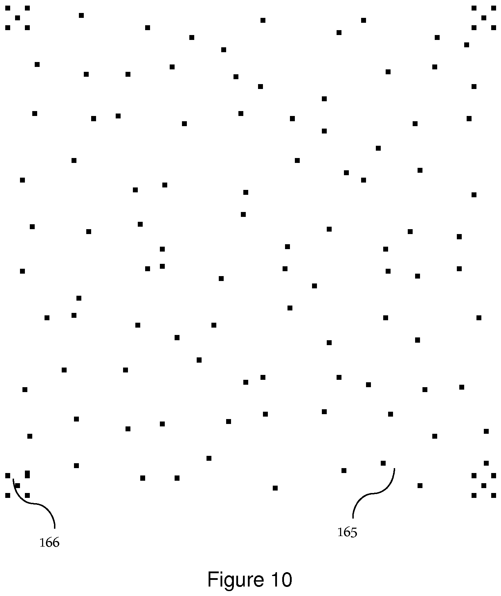

Une autre façon d'introduire des marques de référence discrètes dans le MPCV consiste à insérer des cellules constituées d'un ensemble de points aux formes caractéristiques facilement repérables. Par exemple, si on souhaite qu'un point serve de référence, on insère un nombre significatif de points qui sont voisins d'un point de référence pour obtenir un amas de points facilement repérable. La figure 10 illustre un MPCV 165 dont les quatre coins 166 consistent en une cellule comportant un point central et quatre points voisins très proches, formant les coins d'un carré centré sur le point central. A la détection, on commence par détecter l'ensemble des points sur une surface suffisante, qui serviront de « candidates ». Puis pour chaque point, on détermine le nombre de ses voisins à une distance inférieure ou égale à une distance prédéterminée. Ceci peut être fait rapidement si les points candidats sont disposés sur une grille, ce qui permet de dénombrer rapidement le nombre de voisins dans une fenêtre. On conserve un nombre limité de candidats, par exemple six candidats, qui possèdent le plus grand nombre de voisins. Des techniques géométriques connues peuvent alors être utilisées afin de déterminer quelles sont les candidats correspondant aux points de référence, ici les coins du MPCV. Pour le MPCV 165, on sait, par exemple, que trois candidats valables doivent former un triangle isocèle rectangle.

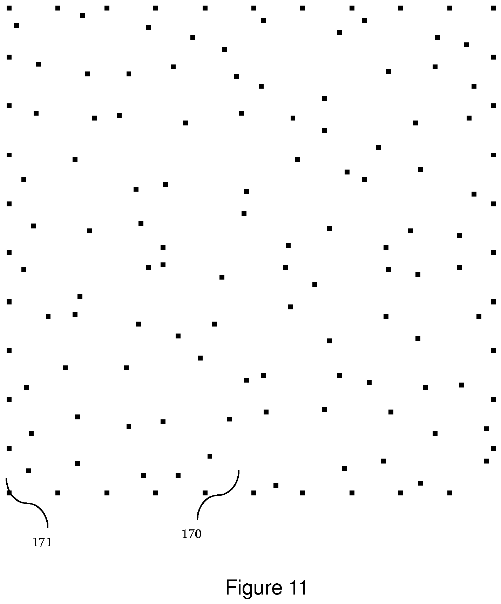

Une autre façon d'introduire des marques de références discrètes consiste à insérer des points selon une ligne. La figure 11 illustre un MPCV 170 avec, sur les bords, des lignes 171 portant un plus grand nombre de points que les lignes parallèles se trouvant à l'intérieur du MPCV 170. Ces lignes de bord peuvent être détectées par différents algorithmes de détection de lignes, par exemple en appliquant la transformée de Hough, et/ou en appliquant un filtre de Sobel permettant de filtrer le bruit.

En variante, on applique un tuilage du même MPCV ou de différents MPCV comportant des lignes de points ou des marques repérables, par exemple des amas de points comme illustré en figure 10.

Dans un mode de réalisation préférentiel, un MPCV est disposé sous forme d'une grille régulière. En effet, il peut être, dans certains cas, avantageux de dupliquer, par tuilage, le MPCV sur une grande surface, voire sur l'ensemble du document à protéger. On rend ainsi la destruction du MPCV très difficile, voire impossible, et on augmente la flexibilité sur la position de la capture d'image. En particulier, on peut insérer par tuilage plusieurs fois le même MPCV. Egalement, on peut insérer un MPCV au moins partiellement différent de tous les autres MPCV. On peut utiliser les moyens de repérage décrits précédemment afin de correctement se positionner pour lire le MPCV. Cependant, en pratique, les éléments de référence, de synchronisation ou de repérage peuvent être difficiles à détecter correctement.

Comme on le verra plus bas, en disposant les points sous forme d'une grille, on peut faciliter la détection. Les points sont insérés à intervalles réguliers, par exemple avec un espacement entre 4 et 12 pixels dans chaque direction. Sur la base de ce principe, il existe plusieurs façons de représenter de l'information :

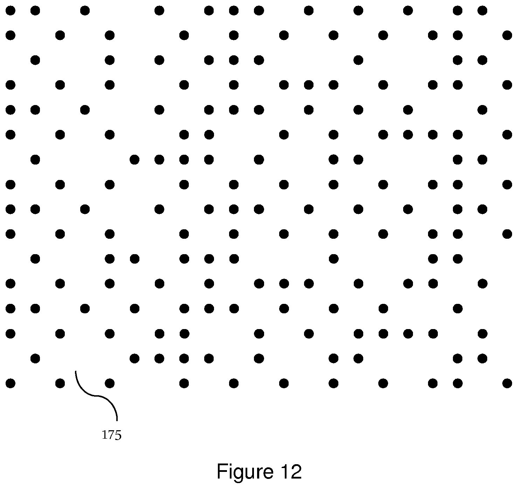

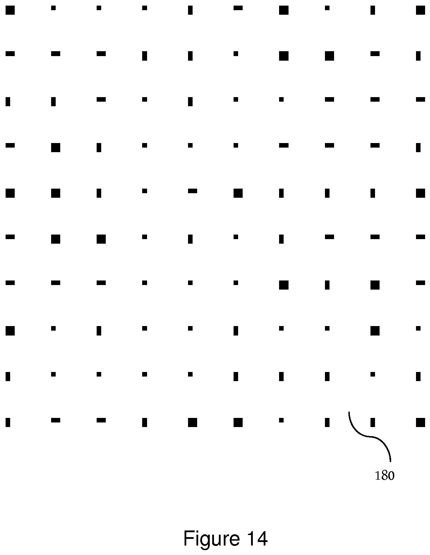

- la présence d'un point ou son absence permet de représenter un bit d'information, comme dans le MPCV 175 illustré en figure 12, dans laquelle la présence d'un point correspond au bit de valeur '1', et son absence au bit de valeur '0' ;
- la taille, la forme ou un décalage d'une amplitude inférieure à au moins une dimension des points du MPCV permet de représenter de l'information. Par exemple, le choix du point, parmi quatre formes ou quatre choix de dimensions, permet de faire représenter, à chaque point d'un MPCV 180, deux bits d'information, comme illustré en figure 14, qui représente, agrandi, un détail du MPCV 180. On observe que les points de ce MPCV peuvent prendre les dimensions, en pixel (le premier chiffre indiquant la hauteur et le second, la largeur) 1 x 1, 2 x 2, 1 x 2 et 2 x 1 pixels correspondent respectivement aux valeurs de bits « 00 », « 01 », « 10 » et « 11 ». De nombreuses autres combinaisons et formes de points sont, bien sûr, possibles.

En variante, sur le principe d'une grille parfaitement régulière, un léger déplacement d'un point permet de représenter de l'information. Par exemple, le déplacement d'un point faisant au moins deux pixels de surface, déplacement de un pixel horizontalement et/ou verticalement permet de représenter deux bits d'information. De nombreuses autres possibilités sont, bien sûr, possibles. Notons qu'un tel déplacement des points ne modifie pas significativement les caractéristiques géométriques, et donc les avantages, de l'utilisation d'une grille, notamment au niveau du repérage.

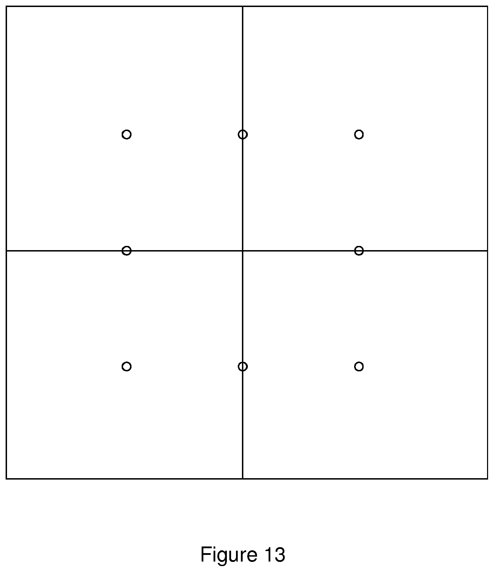

Une grille se prête particulièrement bien à la détermination de l'angle de rotation et du facteur de redimensionnement appliqué à l'image captée. En effet, On peut notamment se baser sur une transformée de Hough de l'image, ou se baser sur la détermination des pics d'énergie dans l'espace de Fourier. La figure 13 est une représentation de la valeur absolue de la transformée de Fourier bidimensionnelle de la grille de la figure 12, dans laquelle les points de valeur claire correspondant à des pics d'énergie. La détection de ces pics d'énergie permet à l'homme du métier de calculer l'angle de rotation et le facteur de redimensionnement de l'image permettant à cette dernière d'obtenir des dimensions normalisées, en vue de leur traitement.

Une fois la rotation et le l'échelle de l'image connus et, éventuellement, corrigés, on détermine la valeur de translation, c'est-à-dire le déplacement à appliquer à l'image afin d'aligner correctement les points de la grille. Pour cela, différentes méthodes sont possibles. Toutes ont pour point commun de fixer les valeurs d'un ensemble de points de la grille, qui sont, par la suite, recherchés afin d'aligner la grille. Par exemple, on peut fixer les valeurs d'un ensemble de points, choisies de façon pseudo-aléatoire en fonction d'une clé. Une corrélation croisée entre l'image capturée et corrigée de la grille, et une image générée à partir des valeurs de points connues, génère un pic de corrélation à la position correspondant au déplacement de la grille.

En ce qui concerne l'algorithme d'écriture, de nombreuses méthodes connues de l'homme du métier sont possibles. A titre d'exemple, supposons que l'on dispose d'une grille, tuilée ou non, de 20 x 20 cellules sur la base des hypothèses suivantes : l'impression est effectuée à 600 points par pouce, et 1% de la surface peut être marquée (pour minimiser l'impact visuel du marquage), ce qui fait, en moyenne, un point tous les 10 pixels, dans chaque direction. La tuile fait donc à l'origine 200 x 200 pixels ; le moyen de capture d'image produit des images de 640 x 480 pixels à la résolution de capture est de 720 pixels par pouce. On remarque qu'on est assuré qu'au moins une tuile soit intégralement contenue dans l'image captée.

On reçoit, en entrée, un message, par exemple de 8 octets, une clé cryptographique et une clé de brouillage (les deux clés pouvant être identiques), au cours d'une étape 502. On chiffre le message au cours d'une étape 504. On peut optionnellement lui ajouter des bits de détection d'erreurs, par exemple deux octets permettent de réduire le risque d'erreur de décodage du message par un facteur 2 puissance 16, au cours d'une étape 506. A partir du message chiffré concaténé avec le code détecteur d'erreur, de 10 octets dans notre exemple, on calcule le message robuste aux erreurs, par exemple en appliquant un code convolutionnel, au cours d'une étape 508. Pour un code convolutionnel de taux deux avec une mémoire de sept, on obtient, pour huit octets en entrée, un code faisant 142 bits. Si on dispose de 20x20 points = 400 positions, on peut répliquer ce message deux fois, obtenant ainsi un message répliqué de 284 bits, au cours d'une étape 510. Ainsi, on dispose de 400 - 284 = 116 positions non-utilisées, qui serviront à stocker les bits de synchronisation utilisés à la détection pour l'alignement de la tuile, comme décrit plus bas. Le message répliqué est brouillé, au cours d'une étape 512, c'est-à-dire, tour à tour, permuté et transformé par une fonction ou-exclusif. La permutation et les valeurs des bits utilisés dans la fonction ou-exclusif sont calculées à partir de la clé de brouillage. On obtient alors 284 bits brouillés.

Les 116 bits de synchronisation sont générés pseudo-aléatoirement à partir d'une clé, et leur position peut aussi être déterminée pseudo-aléatoirement, de façon à ce qu'ils soient uniformément répartis dans la tuile, au cours d'une étape 514.

L'image du MPCV est modulée simplement en ajoutant aux positions définies, un point pour le bit '1' (il n'y a pas de modification pour le bit '0'). Evidemment, le point peut être composé pour avoir une ou des dimensions, une forme et/ou une position variable(s), selon les méthodes vues précédemment.

Si on désire couvrir une grande surface, les tuiles sont ajoutées les unes à la suite des autres, au cours d'une étape 516. On peut alors, selon les variantes, disposer toujours la même tuile ou faire varier le message à chaque tuile. Par exemple de cette deuxième variante, une partie du message peut rester fixe, alors qu'une autre partie, par exemple un octet, est déterminée aléatoirement pour chaque tuile. On peut aussi appliquer une rotation aléatoire multiple de 90 degrés à chaque tuile, de façon à rendre plus difficiles les tentatives d'analyse du code par un contrefacteur. De plus, on peut insérer, de manière aléatoire, les bits de synchronisation ou leur inverse, c'est-à-dire que, pour les bits de synchronisation, on inverse les positions où un point est inséré. L'avantage de cette dernière approche est que le nombre de configurations possibles augmente sans que la lecture devienne plus complexe, comme on le verra. En considérant les variations d'orientation, on peut alors avoir 8 configurations possibles pour les bits de synchronisation, ce qui complexifie leur analyse dans le cadre d'une attaque par un contrefacteur.

La grille 200 x 200 de notre exemple peut être répliquée, comme exposé ci-dessus.

Le MPCV est ensuite inséré dans les films d'impression et le document est imprimé, au cours d'une étape 518.

En ce qui concerne l'algorithme de lecture, on effectue :

- une étape 548 de capture d'une image du document,
- une étape de pré-traitement 550 : il peut être avantageux de prétraiter l'image, notamment pour l'étape suivante de détermination des points candidats. On souhaite, avec le prétraitement, éliminer les bruits parasites ainsi que les dérives d'éclairement. L'application d'un filtre passe-haut omni-directionnel dont le résultat est pondéré avec l'image initiale permet par exemple de réduire les dérives d'éclairement, et l'application d'un filtre médian permet de réduire le bruit de pixels isolés ;
- on détermine les points candidats, au cours d'une étape 552 : les points candidats correspondent aux pixels d'image dont la luminance est une valeur inférieure à un seuil. Ce seuil est par exemple un pourcentile de l'histogramme, tel que 1%, de telle sorte qu'il y a au maximum 1% des pixels qui sont des points candidats. On élimine les candidats qui sont très proches (par exemple, une distance inférieure à cinq pixels), pour ne garder que ceux ayant la valeur la plus basse dans la région ;
- on détermine, au cours d'une étape 554, les vecteurs de points candidats voisins et on estime l'angle de rotation et le facteur d'échelle : on donne une valeur limite de distance entre voisins, et on répertorie tous les couples de points ayant une distance inférieure à ce seuil. Si ce seuil est suffisamment bas, seuls les quatre voisins directs d'un point pourront être associés en un vecteur, sinon les voisins indirects (en diagonale) pourront être associés. Il est préférable d'éviter que des points non-voisins soient associés. Pour cela, on évite une valeur de seuil trop élevée. On peut alors estimer l'angle de rotation en ramenant l'angle de chacun des vecteurs à une valeur entre 0 et 90 degrés ;
- si les voisins indirects sont inclus, au cours d'une étape 556, on sépare les vecteurs en deux groupes en fonction de leur taille (qui est plus grande par un facteur racine de 2 pour les voisins indirects), et on soustrait 45 degrés à l'angle calculé pour les voisins indirects. On peut aussi estimer le facteur d'échelle en mesurant la distance moyenne entre points d'un même groupe, divisée par la distance dans l'image d'origine si celle-ci est connue ;
- en option, au cours d'une étape 558, on restaure l'image pour constituer une image sans rotation, à sa taille d'origine ou multiple entier de sa taille d'origine ;
- au cours d'une étape 560, on extrait une matrice représentant les valeurs représentées par les points : on connaît la distance moyenne entre les points, par exemple 10 pixels, et la dimension de l'image reconstruite, par exemple 500 x 500 pixels. On génère alors un tableau de taille 50 lignes x 50 colonnes qui servira à stocker les valeurs estimées du message, sachant que le rapport entre les dimensions de l'image reconstruite et la distance estimée entre les points correspond à un seuil maximum sur le nombre de points présents dans l'image. En réalité, si la grille de points dans l'image captée avait un angle de rotation significatif, le nombre de points dans l'image reconstruite sera probablement significativement moins élevé.
- dans le but de remplir ce tableau par les valeurs estimées du message, au cours d'une étape 562, on cherche un point de départ pour balayer l'image. Ce point peut par exemple être le premier point candidat détecté en haut à gauche de l'image, ou encore le point candidat ayant la plus forte probabilité d'être un point (par exemple le point de niveau de gris la plus bas). On note qu'il est important de ne pas se tromper sur le point sélectionné, une erreur pouvant avoir des conséquences fâcheuses sur la suite des calculs. On peut procéder par itération sur le point de départ choisi si les étapes suivantes de lecture du message échouent. On stocke une valeur pour le point sélectionné dans le tableau, par exemple son niveau de gris, ou sa plus faible valeur de niveau de gris, dans une certaine zone autour de la position centrale, de façon à éviter une mesure erronée si la position estimée du point est légèrement décalée par rapport à la position réelle, ce décalage étant dû aux décalages pseudo-aléatoires destinées à détecter la présence d'une copie, ou étant dû à toute autre imprécision du positionnement. La valeur est stockée à la position correspondante du tableau, dont les positions dans notre exemple vont de (0,0) à (49,49) : par exemple à la position (0,0) si le point de départ est le premier point en haut à gauche, ou à la position (32,20) si le point de départ de plus forte probabilité est à la position (322,204). Ensuite, on balaye toutes les positions de l'image à partir du point de départ en stockant la valeur trouvée pour chaque point à la position correspondante du tableau ;

- au cours d'une étape 564, on aligne la grille : en général, le tableau de valeur est en décalage par rapport au commencement de la tuile. Pour inverser ce décalage, on utilise les bits de valeurs connue, soit les bits de synchronisation, qui permettent de déterminer le décalage. Ainsi, on peut corréler les bits de synchronisation connus avec le tableau de valeurs, pour chaque décalage possible, et pour les quatre orientations générales possibles (0, 90, 180 ou 270 degrés). La valeur de corrélation la plus forte détermine le décalage ainsi que l'orientation générale. Alternativement, cela pourrait être la valeur la plus faible ou la valeur absolue de la corrélation, si une tuile est imprimée en négatif, par rapport à une autre tuile. Dans le cas où on aurait inséré aléatoirement les bits de synchronisation ou leur inverse, on prend la valeur absolue de corrélation la plus forte pour déterminer le décalage. La corrélation peut être effectuée dans le domaine de Fourier pour réduire la quantité de calculs. On note que les tuiles peuvent être également délimitées par des lignes continues, ou par des concentrations de points particulières, qui peuvent servir de repère pour l'alignement ;

- au cours d'une étape 566, on reconstruit le message brouillé : on peut alors reconstruire le message brouillé. Par exemple, si celui-ci est contenu dans une grille de 20x20, on génère une matrice 20x20 et on y insère les valeurs trouvées. Le reste du décodage du message peut s'effectuer selon des méthodes standard de l'art antérieur. Une fois le message brouillé calculé, on applique l'inverse des opérations décrites dans l'algorithme de lecture décrit plus haut,

- au cours d'une étape 568, optionnelle, comme autres mesures, si la grille possède des caractéristiques particulières permettant la détection de copie, par exemple le positionnement précis ou la taille des points, ces caractéristiques peuvent être mesurées sur la grille déterminée afin de prendre une décision sur la nature du document (original ou copie) ou l'identification / caractérisation unitaire du document.

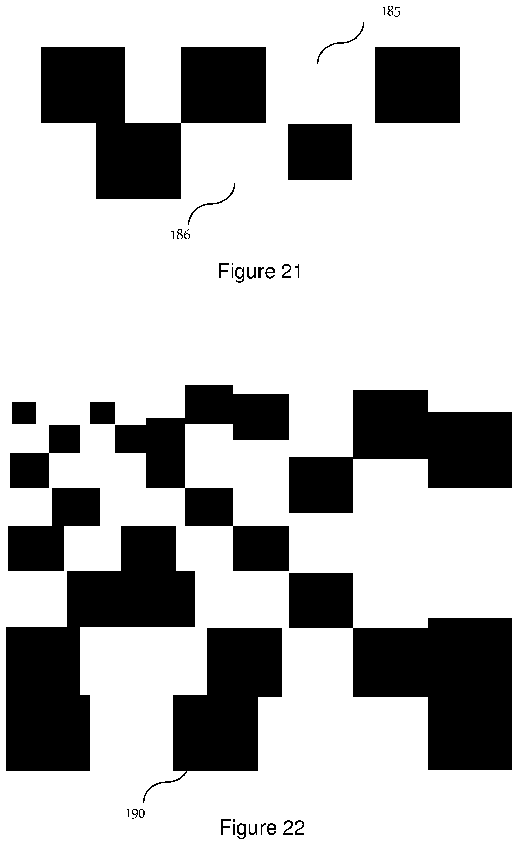

La figure 21 représente une partie grandie d'un MPCV de forte densité, chaque ligne d'une matrice de points constituant ce MPCV comportant sensiblement autant de points noirs que de fond ou arrière-plan blanc, ceux-ci représentant de l'information codée, ou non. Dans la ligne supérieure 185, la position latérale de chaque point est variable alors que, dans la ligne inférieure 186, les dimensions des points sont variables, ici entre deux valeurs correspondant à 3 x 3 pixels de génération et 2 x 2 pixels de génération. On comprend que de tels MPCV présentent un avantage de compacité pour insérer un nombre de points donné dans un document tout en bénéficiant des avantages de la variation de dimension(s), position et/ou forme, dont l'amplitude moyenne est de l'ordre de grandeur d'au moins une dimension d'une partie des points et/ou de la variation imprévisible due à l'impression, préférentiellement, inférieure à la première de ces dimensions. Comme on le comprend aisément, au moins la moitié des points de ce MPCV ne sont pas juxtaposés à quatre autres points. En revanche, moins de la moitié des points n'en touche aucun autre.

La figure 22 représente une partie agrandie d'un MPCV 190 à gradient de dimensions de points. Cette partie correspond à un coin d'un MPCV dans lequel, par couronnes successives, ici d'une épaisseur d'une ligne mais, dans la pratique, de plusieurs lignes, les dimensions des points sont réduites. Par exemple, les dimensions des points sont de 6 x 6 pixels pour la couronne bordant en bas et à droite la partie représentée en figure 22, puis de 5 x 5 pixels pour la couronne suivante, puis de 4 x 4 pixels et ainsi de suite.

Grâce à cette disposition particulière, pour au moins l'une des couronnes l'amplitude moyenne des variations imprévisibles, point par points, d'au moins une caractéristique géométrique des points, est du même ordre de grandeur qu'une dimension des points de cette couronne.

On comprend que de tels MPCV présentent un avantage de compacité pour insérer un nombre de points donné dans un document tout en bénéficiant des avantages de la variation de dimension(s), position et/ou forme, dont l'amplitude moyenne est de l'ordre de grandeur d'au moins une dimension d'une partie des points et, préférentiellement, inférieure à cette dimension et/ou de la variation géométrique imprévisible moyenne de l'impression.

Pour les procédé d'impression pour laquelle une plaque est utilisée afin d'imprimer un grand nombre de fois une même image, on sait que chacune des impressions de cette plaque permet de la distinguer de manière unique de toutes les autre impressions de cette même plaque : plusieurs méthodes sont présentées ici pour extraire et comparer ces empreintes, ainsi que pour générer des images maximisant l'unicité de ce empreintes.

Les inventeurs ont découvert que chaque plaque possède également une empreinte unique qui se retrouve dans chacune des impressions qu'elle réalise. Il a été découvert qu'on peut déterminer si une impression provient d'une certaine plaque en comparant une image captée de l'impression et une image captée de la plaque. De manière encore plus inattendue, il a été découvert qu'on peut déterminer si deux impressions proviennent d'une même plaque, en comparant les images captées de ces deux impressions.

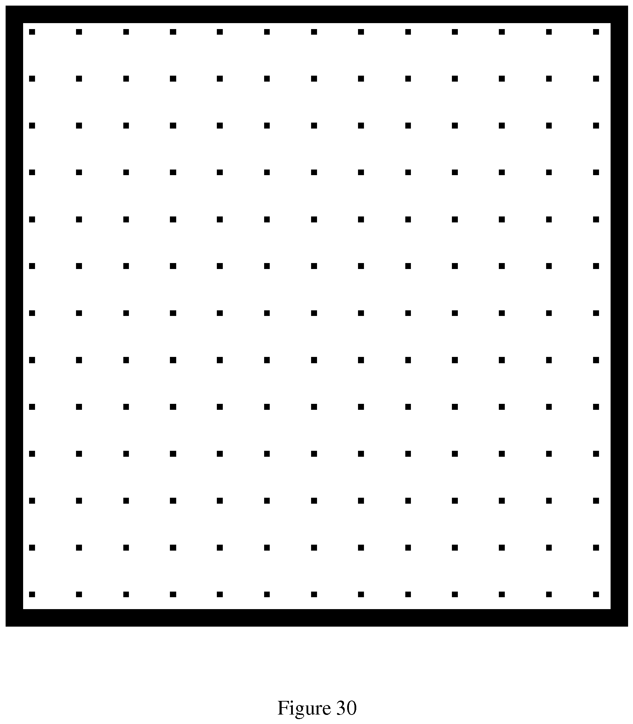

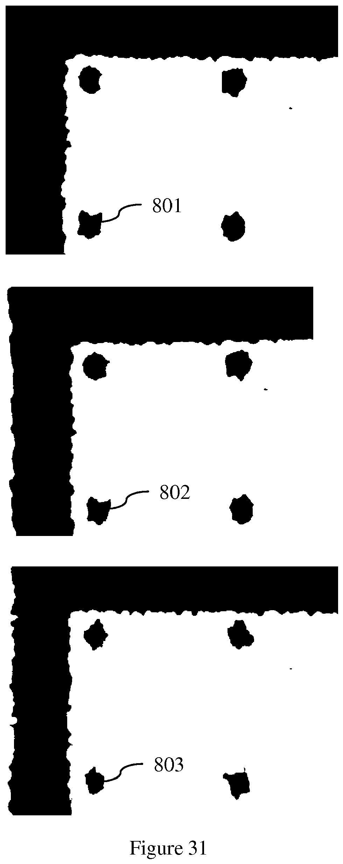

En figure 30 est représentée une image numérique source composée de points identiques de 4x4 pixels. On a marqué cette image sur plusieurs plaques différentes servant à l'impression offset, et on a réalisé plusieurs impressions différentes de chacune de ces plaques. On a constaté que, si chaque impression donne une forme unique pour chacun des points, les différentes impressions d'une même plaque présentent néanmoins des similarités singulières. La figure 31 représente des captures à haute résolution (à 20 000 ppi) du coin supérieur gauche de trois impressions de l'image. Les deux images du haut proviennent d'impressions de la même plaque, alors que celle du bas provient d'une plaque différente. On observe notamment que les points 801 et 802 des deux impressions de la même plaque, quoique différents, présentent des similitudes de forme nettes, alors que le point 803, de l'autre plaque n'a aucune similtude de forme avec les premières.

L'exploitation d'une empreinte de la plaque a un grand intérêt dans la lutte contre la contrefaçon. En effet, si en principe l'exploitation de l'empreinte de chaque impression permet de répertorier les impressions légitimes et est ainsi une protection efficace, il n'est pas toujours possible d'enregistrer ces empreintes, pour des raisons de coût ou de logistique. On peut, en revanche, plus facilement capturer une ou plusieurs images de différents éléments de la plaque, soit sur la plaque elle-même, soit sur une impression de cette plaque. Par la suite, on peut déterminer si une impression suspecte provient ou non de cette plaque. Par exemple, si le fichier contenant les données numériques du document est volé et utilisé pour créer des copies qui, à priori, peuvent être parfaites, on peut déterminer que les impressions proviendraient d'une plaque différente, et donc ne sont pas légitimes.

En général, les éléments discriminants d'une signature se situent dans les zones de transition, par exemple la bordure des lettres d'un texte, les limites d'un code-barre, dans les zones riches en information à haute résolution tel que les MIS, ou au niveau de bordures de points imprimés tels quand dans les MSMA, les MPCV. On peut alors se concentrer sur une petite zone très riche en information discriminante, et, préférentiellement, effectuer une capture à haute résolution pour extraire un maximum de détails. On peut également générer et insérer des images qui maximisent la richesse de variations de détails. Par exemple, l'image en Figure 30, bien que très simple et comportant simplement plusieurs fois un point identique (dans l'image numérique), donne une signature propre à la plaque, ainsi qu'une signature propre à l'impression, qui est riche en information. On note que l'on peut augmenter la densité de points, en évitant préférentiellement qu'ils se touchent, pour augmenter l'unicité de la signature. On remarque qu'on peut utiliser les mêmes caractéristiques extraites de l'image pour une signature qui sert à la fois à identifier la plaque ayant servi à l'impression, et qui sert à identifier une impression particulière effectuée avec cette plaque.

On a imprimé sur dix plaques différentes l'image donnée en figure 30, puis on a imprimé un grand nombre de fois chacune des dix plaques. On a capturé en tout 120 images à 2 400 dpi, et pour chaque image un vecteur de caractéristiques servant de signatures composé du niveau de gris pour chacun des 169 points de l'image. La mesure du niveau de gris est simple à obtenir, et est en effet représentative de la surface et de la densité d'impression du point, elle-même dépendant de la surface du point marqué sur la plaque, qui est variable. Certes, la mesure précise du contour serait à priori préférable car plus riche en information, mais à 2 400 dpi la capture du point ne permet pas une détermination très précise de celui-ci. Le niveau de gris est donc une information très dégradée, mais comme on va le voir ici, suffisante pour déterminer l'identité de la plaque, ou vérifier que deux impressions proviennent de la même plaque.

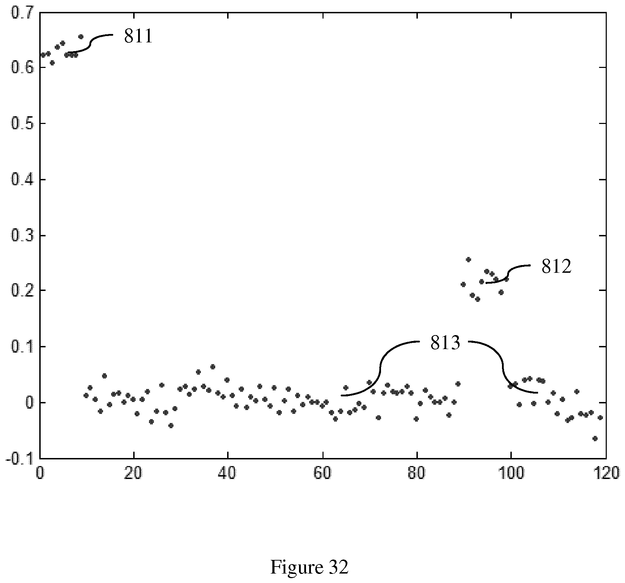

On a mesuré et illustré en figure 32, la corrélation statistique entre le vecteur de caractéristique d'une capture d'une impression et d'autres captures de la même impression, en 811, des captures d'autres impressions provenant de la même plaque, en 812, et des captures provenant d'impressions de plaques différentes, en 813. On observe en 811 les corrélations avec les captures de la même impression, qui se situent entre 0,6 et 0,65. On note que si la capture était à plus haute résolution ou de meilleure qualité, on devrait avoir des valeurs proche de 1. En 812, on a dix captures provenant d'images d'impressions de la même plaque, avec des corrélations entre 0,2 et 0,3. Même si ces corrélations sont relativement basses, ce qui est en partie dû à la qualité de la capture, elles sont significativement différente de 0, ce qui s'explique effectivement par l'effet « tatouage » de la plaque. En 813, on a 100 captures provenant d'impressions de plaques différentes, avec des coorélations en moyenne de 0, comme on pouvait s'y attendre. On distingue toutes les corrélations du groupe 813 de celles du groupe 812. Ainsi, avec une valeur de seuil bien choisie, par exemple de 0,15, on peut identifier les images provenant de la même plaque.

Si une image à très haute résolution est disponible, par exemple telle que les images illustrées en figure 31, on peut effectuer des mesures beaucoup plus précises, par exemple en se basant sur le contour précis du point. Ces mesures permettent d'obtenir des signatures de meilleure qualité et plus discriminantes. On peut notamment utiliser des méthodes d'analyse d'image connues de l'homme du métier. Par exemple pour mesurer la similarité entre deux objets, on se base sur la similarité de leur contour représenté par un vecteur monodimensionel représentant la distance au centre de gravité en fonction de la direction angulaire. Une telle méthode, et d'autres pouvant aussi servir au même objectif de comparaison de deux objets, sont décrites dans l'ouvrage « Machine Vision: Theory, Algorithms, Practicalities » de E. R. Davies.

Dans un premier mode de réalisation, pour l'identification d'une plaque d'impression d'un document, on effectue :

- une étape d'impression d'au moins un document avec ladite plaque,
- une étape de capture, à haute résolution, d'au moins une image d'au moins une partie d'un dit document,
- une étape d'extraction d'une caractéristique géométrique d'au moins une image captée,
- une étape de mise en mémoire de la caractéristique géométrique extraite,
- pour un document candidat dont on cherche à déterminer si ladite plaque d'impression a servi à l'imprimer, une étape de capture, à haute résolution, d'une image de la partie dudit document candidat correspondant à la partie de document dont on a mémorisé une caractéristique géométrique,
- une étape d'extraction de la caractéristique géométrique de l'image dudit document candidat correspondant à la caractéristique géométrique mémorisée et
- une étape de détermination si une mesure de corrélation de la caractéristique géométrique pour ledit document candidat et de la caractéristique géométrique mémorisée est supérieure à une valeur limite prédéterminée.

Dans des modes de réalisation, le procédé comporte, en outre, une étape de détermination d'une caractéristique géométrique globale pour chaque impression effectuée par ladite plaque, une étape de mémorisation de ladite caractéristique géométrique et, pour le document candidat, une étape de détermination de la caractéristique géométrique globale correspondant à la caractéristique géométrique globale mémorisée et une étape de détermination de la plus forte corrélation de caractéristique géométrique mémorisée avec la caractéristique géométrique du document candidat.

Préférentiellement, on met en oeuvre une étape de génération d'une image à imprimer avec ladite plaque, ladite image comportant une pluralité de points ne se touchant pas entre eux, comme exposé ci-dessus.

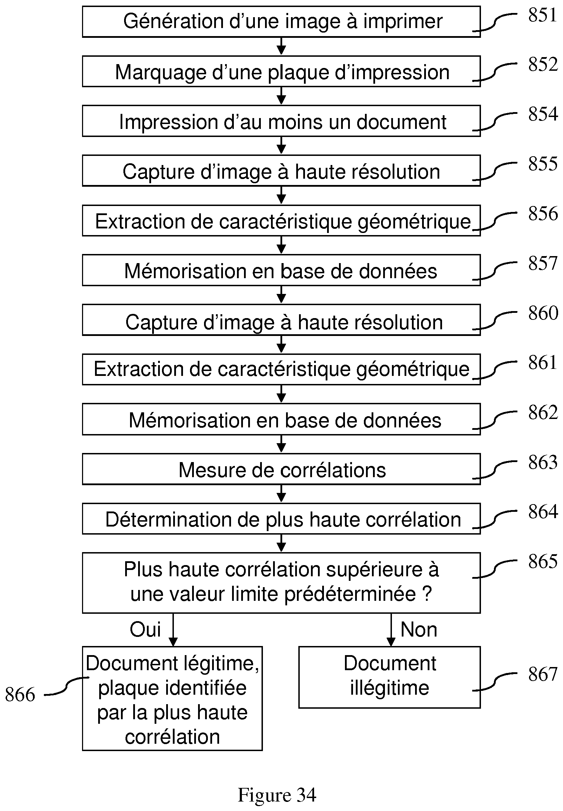

La figure 34 illustre des étapes d'un autre mode de réalisation du procédé de détermination de plaque ayant servi à une impression d'un document.

On observe, tout d'abord, une étape 851 de génération d'une image à imprimer, par exemple une matrice telle qu'exposée ci-dessus.

Puis, au cours d'une étape 852, on effectue le marquage d'une plaque d'impression avec ladite image à imprimer.

Au cours d'une étape 854, on effectue une impression d'au moins un document avec ladite plaque.

Au cours d'une étape 855, on effectue une capture, à haute résolution, d'au moins une image d'au moins une partie d'un document portant une impression faite lors de l'étape 854.

Au cours d'une étape 856, on extrait une caractéristique géométrique d'au moins une image captée au cours de l'étape 855. Par exemple, on repère un coin de l'image imprimée et on repère, en fonction de ce coin, un point particulier de l'image imprimée. Par exemple, on extrait le contour du point et on réalise un vecteur représentant la distance du contour au centre de gravité du point, en fonction de l'angle. Préférentiellement, on utilise plusieurs images captées à haute résolution au cours de l'étape 855 pour former une moyenne des caractéristiques du même point dans les différentes images.

Au cours d'une étape 857, on met en mémoire, par exemple dans une base de données la caractéristique géométrique extraite au cours de l'étape 856.

Lors de la recherche si un document est légitime et de quelle plaque a servi à l'imprimer, au cours d'une étape 860, on effectue une capture, à haute résolution, d'une image d'une partie du document correspondant à la partie de document mise en oeuvre au cours des étapes 855 à 857.

Au cours d'une étape 861, on extrait la caractéristique géométrique de l'image captée au cours de l'étape 855. Par exemple, on repère un coin de l'image imprimée et on repère, en fonction de ce coin, un point particulier de l'image imprimée. On met préférentiellement en oeuvre les mêmes algorithmes que ceux mis en oeuvre dans l'étape 856. Préférentiellement, on utilise plusieurs images captées à haute résolution au cours de l'étape 861 pour former une moyenne des caractéristiques du même point dans les différentes images.

Au cours d'une étape 862, on met en mémoire, par exemple dans la base de données utilisée au cours de l'étape 857, la caractéristique géométrique extraite au cours de l'étape 861.

Au cours d'une étape 863, on effectue une mesure de corrélation de la caractéristique géométrique déterminée au cours de l'étape 861 et des caractéristiques géométriques de points correspondants conservées en mémoire depuis l'étape 857.

Au cours d'une étape 864, on détermine la corrélation la plus élevée.

Au cours d'une étape 865, on détermine si cette corrélation est supérieure à une valeur limite, ou valeur « seuil », par exemple de 0,15. Si oui, au cours d'une étape 866, on considère que le document est légitime et a été imprimé avec la plaque qui a imprimé le point présentant la corrélation la plus élevée. Sinon, au cours d'une étape 867, on considère que le document est illégitime. Eventuellement, par comparaison avec un second seuil, on détermine s'il s'agit d'une copie effectuée à partir d'un document imprimé avec la plaque qui a imprimé le point présentant la corrélation la plus élevée.

On observe que, pour identifier un travail (une série d'impression sans démontage de la plaque), parmi plusieurs travaux effectués avec la même plaque, il est préférable d'utiliser un grand nombre de points et une plus haute résolution d'image que pour simplement identifier la plaque.

En effet, même si la plaque était initialement légitime, elle a pu être volée et avoir servi à l'impression de document illégitimes. Son histoire mécanique, sa corrosion et son encrassement éventuels, peuvent se retrouver dans une signature de travail plus difficile a discerner (ou identifier) que la simple signature de la plaque.

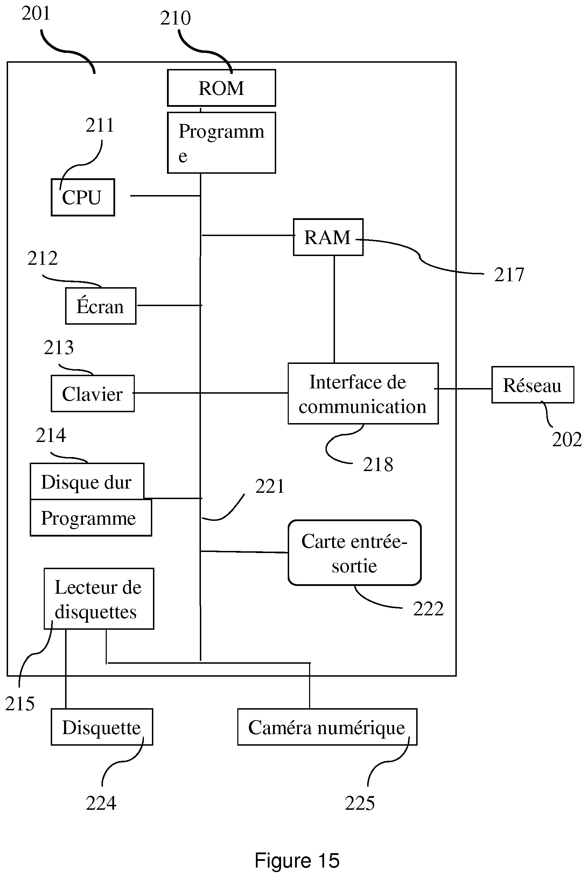

La figure 15 illustre un mode de réalisation particulier du dispositif objet de la présente invention. Ce dispositif 201, par exemple un micro-ordinateur et ses différents périphériques, comporte une interface de communication 218 reliée à un réseau de communication 202 apte à transmettre et à recevoir des données numériques. Le dispositif 201 comporte également un moyen de stockage 214, tel que par exemple un disque dur. Il comporte aussi un lecteur de disquette 215. La disquette 224 peut contenir des données à traiter ou en cours de traitement ainsi que le code d'un programme implémentant la présente invention, code qui, une fois lu par le dispositif 101, est stocké dans le disque dur 114. Selon une variante, le programme permettant au dispositif de mettre en oeuvre la présente invention, est stocké en mémoire morte 110 (appelée ROM, acronyme de « read only memory »). En seconde variante, le programme pourra être reçu pour être stocké de façon identique à celle décrite précédemment par l'intermédiaire du réseau de communication 202.

Le dispositif 201 possède un écran 212 permettant de visualiser les résultats de traitement et d'interagir avec le dispositif, par exemple par l'intermédiaire d'interfaces graphiques. A l'aide du clavier 213, l'utilisateur peut fournir des données, des surfaces, des densités, des résolutions, des valeurs de paramètres ou des clés, ou effectuer des choix d'implémentation. L'unité centrale 211 (appelée « CPU », acronyme de « central processing unit », sur le dessin) exécute les instructions relatives à la mise en oeuvre de l'invention, instructions stockées dans la mémoire morte 210 ou dans les autres éléments de stockage. Lors de la mise sous tension, les programmes relatifs à la mise en oeuvre du procédé objet de la présente invention stockés dans une mémoire non volatile, par exemple la ROM 210, sont transférés dans la mémoire vive RAM 217 qui contient alors le code exécutable du programme objet de la présente l'invention ainsi que des registres pour mémoriser les variables nécessaires à la mise en oeuvre de l'invention. Bien entendu, les disquettes 224 peuvent être remplacées par tout support d'information tel qu'un disque compact ou une carte mémoire. De manière plus générale, un moyen de stockage d'information, lisible par un ordinateur ou par un microprocesseur, intégré ou non au dispositif, éventuellement amovible, mémorise un programme mettant en oeuvre le procédé objet de la présente invention. Le bus de communication 221 permet la communication entre les différents éléments inclus dans le micro-ordinateur 201 ou reliés à lui. La représentation du bus 221 n'est pas limitative et, notamment, l'unité centrale 211 est susceptible de communiquer des instructions à tout élément du micro-ordinateur 201 directement ou par l'intermédiaire d'un autre élément du micro-ordinateur 201.

## Revendications

1. Procédé de sécurisation d'un document, **caractérisé en ce qu'**il comporte :

   - une étape de détermination statistique de l'amplitude moyenne d'une variation d'impression imprévisible point par point, d'au moins une caractéristique géométrique, parmi la taille, la forme et/ou le positionnement du point,
   - une étape d'impression d'une distribution de points sur ledit document, ladite impression provoquant, du fait d'aléas d'impression, une variation imprévisible, point par point, d'au moins une caractéristique géométrique des points imprimés parmi la taille, la forme et/ou le positionnement et
   - préalablement à ladite étape d'impression une étape de génération de ladite distribution de points pour que des points de ladite distribution générée aient au moins une caractéristique géométrique, parmi la taille, la forme et/ou le positionnement, variable d'un point à un autre, l'amplitude géométrique de la variation générée étant de l'ordre de grandeur de l'amplitude moyenne de ladite variation d'impression imprévisible déterminé statistiquement ;

   la distribution de points imprimée représentant donc deux variations, l'une générée et l'autre imprévisible point par point.

2. Procédé selon la revendication 1, **caractérisé en ce que**, au cours de l'étape de génération de la distribution de points, l'amplitude géométrique des variations générées est inférieure à la dimension des points.

3. Procédé selon l'une quelconque des revendications 1 et 2, au cours de l'étape de génération de la distribution de points, on génère une distribution de points en fonction de la variation imprévisible du système d'impression utilisé.

4. Procédé selon l'une quelconque des revendications 1 à 3, **caractérisé en ce que**, au cours de l'étape de génération, des points de la distribution de points ont au moins une caractéristique géométrique variable, ladite variation n'étant pas répétitive dans ladite distribution de points.

5. Procédé selon l'une quelconque des revendications 1 à 4, **caractérisé en ce que**, au cours de l'étape de génération, dans ladite distribution de points, au moins la moitié des points de ladite distribution ne sont pas juxtaposés latéralement à quatre autres points de ladite distribution de points.

6. Procédé selon la revendication 5, **caractérisé en ce que**, au cours de l'étape de génération de la distribution de points, plus de la moitié des points ne touchent aucun autre point de ladite distribution.

7. Procédé selon l'une quelconque des revendications 1 à 6, **caractérisé en ce que** ladite variation générée correspond à une variation de position de points, dans au moins une direction, par rapport à une position où les centres des points sont alignés sur des lignes parallèles perpendiculaires à ladite direction et éloignées d'au moins une dimension desdits points dans cette direction.

8. Procédé selon l'une quelconque des revendications 1 à 6, **caractérisé en ce que** ladite variation générée correspond à une variation d'au moins une dimension de points, dans au moins une direction, par rapport à une dimension moyenne desdits points, dans cette direction.

9. Procédé selon l'une quelconque des revendications 1 à 6, **caractérisé en ce que** ladite variation générée correspond à une variation de forme des points, par rapport à une forme moyenne desdits points, dans cette direction.

10. Procédé selon l'une quelconque des revendications 1 à 9, **caractérisé en ce que**, au cours de l'étape de génération, ladite distribution de points est représentative d'une information codée.

11. Procédé selon l'une quelconque des revendications 1 à 10, **caractérisé en ce qu'**il comporte une étape de capture d'image de la distribution de points imprimée et une étape de détermination d'une signature unique de ladite distribution imprimée, en fonction de ladite variation imprévisible d'impression.

12. Procédé selon l'une quelconque des revendications 1 à 11, **caractérisé en ce qu'**il comporte une étape de détermination d'une grandeur représentative de la variation imprévisible du fait d'aléas d'impression du document imprimé par rapport à un distribution de points de référence, l'étape de génération de la distribution de points étant fonction de ladite grandeur.

13. Procédé selon la revendication 12, **caractérisé en ce qu'**il comporte une étape de détection de copie en fonction de la grandeur représentative de la variation imprévisible du fait d'aléas d'impression, du document testé, par rapport à une distribution de points de référence, ladite étape de détection de copie comportant une étape de comparaison de ladite grandeur représentative avec une valeur prédéterminée, et une étape de décision de l'authenticité du document en fonction du résultat de la comparaison.

14. Dispositif de sécurisation d'un document, **caractérisé en ce qu'**il comporte :

- un moyen de détermination statistique de l'amplitude moyenne d'une variation d'impression imprévisible point par point, d'au moins une caractéristique géométrique, parmi la taille, la forme et/ou le positionnement du point,
- un moyen d'impression d'une distribution de points sur ledit document, adapté à ce que ladite impression provoque, du fait d'aléas d'impression, une variation imprévisible, point par point, d'au moins une caractéristique géométrique des points imprimés parmi la taille, la forme et/ou le positionnement et
- un moyen de génération de ladite distribution adapté, préalablement à l'impression, à générer ladite distribution de points pour que des points de ladite distribution générée aient au moins une caractéristique géométrique, parmi la taille, la forme et/ou le positionnement, variable entre eux, l'amplitude géométrique de la variation générée étant de l'ordre de grandeur de l'amplitude moyenne de ladite variation d'impression imprévisible déterminé statistiquement ;

la distribution de points imprimée représentant donc deux variations, l'une générée et l'autre imprévisible point par point.

**15.** Procédé de lecture d'une distribution de points sur un document, **caractérisé en ce qu'**il comporte :

- une étape de capture d'une image de ladite distribution de points du document,
- une étape de détermination d'une grandeur physique représentative d'une variation géométrique de points de ladite distribution par rapport à une distribution de points de référence, au moins une variation de caractéristique géométrique d'au moins une partie des points de ladite distribution de points étant du même ordre de grandeur que la moyenne de la valeur absolue d'une variation imprévisible, point par point, d'au moins une caractéristique géométrique des points imprimés, variation provenant d'aléas d'impression et
- une étape de détermination de l'authenticité de ladite distribution de points, en fonction de ladite grandeur physique, par comparaison avec une valeur limite déterminée statistiquement.

**16.** Dispositif de lecture d'une distribution de points sur un document, **caractérisé en ce qu'**il comporte :

- un moyen de capture d'une image de ladite distribution de points du document,
- un moyen de détermination d'une grandeur physique représentative d'une variation géométrique de points de ladite distribution par rapport à une distribution de points de référence, au moins une variation de caractéristique géométrique d'au moins une partie des points de ladite distribution de points étant du même ordre de grandeur que la moyenne de la valeur absolue d'une variation imprévisible, point par point, d'au moins une caractéristique géométrique des points imprimés, variation provenant d'aléas d'impression et
- un moyen de détermination de l'authenticité de ladite distribution de points, en fonction de ladite grandeur physique, par comparaison avec une valeur limite déterminée statistiquement.

**17.** Programme chargeable dans un système informatique, ledit programme contenant des instructions permettant la mise en oeuvre du procédé selon l'une quelconque des revendications 1 à 13 ou 15.

**18.** Support d'informations lisibles par un ordinateur ou un microprocesseur, amovible ou non, conservant des instructions d'un programme informatique, **caractérisé en ce qu'**il permet la mise en oeuvre du procédé selon l'une quelconque des revendications 1 à 13 ou 15.

**Patentansprüche**

**1.** Sicherungsverfahren eines Dokuments, **dadurch gekennzeichnet, dass** es umfasst:

- einen statistischen Bestimmungsschritt der durchschnittlichen Amplitude einer unvorhersehbaren Punkt-für-Punkt-Druckabweichung wenigstens eines geometrischen Merkmals aus der Größe, der Form und / oder der Positionierung des Punktes,
- einen Druckschritt einer Punktverteilung auf dem genannten Dokument, wobei der genannte Druck aufgrund von Druck-Unwägbarkeiten eine unvorhersehbare Punkt-für-Punkt-Abweichung wenigstens eines geometrischen Merkmals der gedruckten Punkte aus der Größe, der Form und / oder der Positionierung hervorruft und
- vor dem genannten Druckschritt einen Erzeugungsschritt der genannten Punktverteilung, damit Punkte der genannten erzeugten Verteilung wenigstens ein geometrisches Merkmal aus der Größe, der Form und / oder der Positionierung aufweisen, das von einem Punkt zum anderen variabel ist, wobei die geometrische Amplitude der erzeugten Abweichung in der Größenordnung der durchschnittlichen Amplitude der genannten, statistisch bestimmten, unvorhersehbaren Druckabweichung aufweist;

wobei die gedruckte Punktverteilung somit zwei Abweichungen aufweist, eine erzeugte und und die andere unvorhersehbare, Punkt für Punkt.

**2.** Verfahren gemäß Anspruch 1, **dadurch gekennzeichnet, dass** im Verlauf des Erzeugungsschritts der Punktverteilung die geometrische Amplitude der erzeugten Abweichungen niedriger ist als die Abmessung der Punkte.

**3.** Verfahren gemäß irgendeinem der Ansprüche 1 und 2, wobei im Verlauf des Erzeugungsschritts der Punktverteilung eine Punktverteilung in Abhängigkeit von der unvorhersehbaren Abweichung des verwendeten Drucksystems erzeugt wird.

**4.** Verfahren gemäß irgendeinem der Ansprüche 1 bis 3, **dadurch gekennzeichnet, dass** im Verlauf des Erzeugungsschritts Punkte der Punktverteilung wenigstens ein variables geometrisches Merkmal aufweisen, wobei die genannte Abweichung in der genannten Punktverteilung nicht wiederkehrend ist.

5.   Verfahren gemäß irgendeinem der Ansprüche 1 bis 4, **dadurch gekennzeichnet, dass** im Verlauf des Erzeugungsschritts bei der genannten Punktverteilung wenigstens die Hälfte der Punkte der genannten Verteilung lateral an vier anderen Punkten der genannten Punktverteilung nicht nebeneinander liegend sind.

6.   Verfahren gemäß Anspruch 5, **dadurch gekennzeichnet, dass** im Verlauf des genannten Erzeugungsschritts der Punktverteilung mehr als die Hälfte der Punkte keinen anderen Punkt der genannten Verteilung berührt.

7.   Verfahren gemäß irgendeinem der Ansprüche 1 bis 6, **dadurch gekennzeichnet, dass** die genannte erzeugte Abweichung einer Positionsabweichung von Punkten in wenigstens einer Richtung im Verhältnis zu einer Position entspricht, in der die Zentren der Punkte auf den parallelen Linien gefluchtet sind, die zu der genannten Richtung lotrecht und wenigstens um eine Abmessung der genannten Punkte in dieser Richtung entfernt sind.

8.   Verfahren gemäß irgendeinem der Ansprüche 1 bis 6, **dadurch gekennzeichnet, dass** die genannte erzeugte Abweichung einer Abweichung von wenigstens einer Punktabmessung in wenigstens einer Richtung im Verhältnis zu einer durchschnittlichen Abmessung der genannten Punkte in dieser Richtung entfernt sind.

9.   Verfahren gemäß irgendeinem der Ansprüche 1 bis 6, **dadurch gekennzeichnet, dass** die genannte erzeugte Abweichung einer Abweichung von Punktformen im Verhältnis zu einer durchschnittlichen Form der genannten Punkte in dieser Richtung entspricht.

10.   Verfahren gemäß irgendeinem der Ansprüche 1 bis 9, **dadurch gekennzeichnet, dass** im Verlauf des Erzeugungsschritts die genannte Punkterzeugung für eine kodierte Information repräsentativ ist.

11.   Verfahren gemäß irgendeinem der Ansprüche 1 bis 10, **dadurch gekennzeichnet, dass** es einen Bilderfassungsschritt der gedruckten Punktverteilung und einen Bestimmungsschritt einer eindeutigen Signatur der genannten gedruckten Verteilung in Abhängigkeit von der genannten unvorhersehbaren Druckabweichung umfasst.

12.   Verfahren gemäß irgendeinem der Ansprüche 1 bis 11, **dadurch gekennzeichnet, dass** es einen Bestimmungsschritt einer Größe umfasst, die für die unvorhersehbare Abweichung aufgrund von Druck-Unwägbarkeiten des gedruckten Dokuments im Verhältnis zu einer Verteilung von Referenzpunkten umfasst, wobei der Erzeugungsschritt der Punktverteilung von der genannten Größe abhängt.

13.   Verfahren gemäß Anspruch 12, **dadurch gekennzeichnet, dass** es einen Kopie-Erfassungsschritt in Abhängigkeit von der Größe umfasst, die für die aufgrund von Druck-Unwägbarkeiten des getesteten Dokuments unvorhersehbare Abweichung im Verhältnis zu einer Verteilung von Referenzpunkten umfasst, wobei der genannte Kopie-Erfassungsschritt einen Vergleichsschritt der genannten repräsentativen Größe zu einem vorbestimmten Wert und einen Entscheidungsschritt der Echtheit des Dokuments in Abhängigkeit von dem Ergebnis des Vergleichs umfasst.

14.   Sicherungsvorrichtung eines Dokuments, **dadurch gekennzeichnet, dass** sie umfasst:

   - ein statistisches Bestimmungsmittel der durchschnittlichen Amplitude einer unvorhersehbaren Punkt-für-Punkt-Druckabweichung wenigstens eines geometrischen Merkmals aus der Größe, der Form und / oder der Positionierung des Punktes,
   - ein Druckmittel einer Punktverteilung auf dem genannten Dokument, das geeignet ist, dass der genannte Druck aufgrund von Druck-Unwägbarkeiten eine unvorhersehbare Punkt-für-Punkt-Abweichung wenigstens eines geometrischen Merkmals der gedruckten Punkte aus der Größe, der Form und / oder der Positionierung hervorruft und
   - vor dem genannten Druck ein Erzeugungsmittel der genannten Verteilung, um die genannte erzeugte Punktverteilung zu erzeugen, damit Punkte der genannten erzeugten Verteilung wenigstens ein geometrisches Merkmal aus der Größe, der Form und / oder der Positionierung aufweisen, die untereinander variabel sind, wobei die geometrische Amplitude der erzeugten Abweichung die Größenordnung der durchschnittlichen Amplitude des genannten, statistisch bestimmten, unvorhersehbaren Druckabweichung aufweist;

wobei die gedruckte Punktverteilung somit zwei Abweichungen aufweist, eine erzeugte und und die andere unvorhersehbare, Punkt für Punkt.

**15.** Leseverfahren einer Punktverteilung auf einem Dokument, **dadurch gekennzeichnet, dass** es umfasst:

- einen Erfassungsschritt eines Bildes der genannten Punktverteilung des Dokuments;
- einen Bestimmungsschritt einer physikalischen Größe, der für eine geometrische Punktabweichung der genannten Verteilung im Verhältnis zu einer Verteilung von Referenzpunkten repräsentativ ist, wobei wenigstens eine Abweichung des geometrischen Merkmals wenigstens eines Teils der Punkte der genannten Punktverteilung dieselbe Größenordnung aufweist wie der Durchschnitt des absoluten Wertes einer unvorhersehbaren Punkt-zu-Punkt-Abweichung wenigstens eines geometrischen Merkmals der gedruckten Punkte, wenigstens eines geometrischen Merkmals der gedruckten Punkte, wobei die Abweichung von Druck-Unwägbarkeiten stammt, und
- einen Bestimmungsschritt der Echtheit der genannten Punktverteilung in Abhängigkeit von der genannten physikalischen Größe im Vergleich zu einem statistisch bestimmten Grenzwert.

**16.** Lesevorrichtung einer Punktverteilung auf einem Dokument, **dadurch gekennzeichnet, dass** sie umfasst:

- ein Erfassungsmittel eines Bildes der genannten Punktverteilung des Dokuments;
- ein Bestimmungsmittel einer physikalischen Größe, das für eine geometrische Punktabweichung der genannten Verteilung im Verhältnis zu einer Verteilung von Referenzpunkten repräsentativ ist, wobei wenigstens eine Abweichung des geometrischen Merkmals wenigstens eines Teils der Punkte der genannten Punktverteilung dieselbe Größenordnung aufweist wie der Durchschnitt des absoluten Wertes einer unvorhersehbaren Punkt-zu-Punkt-Abweichung wenigstens eines geometrischen Merkmals der gedruckten Punkte, wobei die Abweichung von Druck-Unwägbarkeiten stammt, und
- ein Bestimmungsmittel der Echtheit der genannten Punktverteilung in Abhängigkeit von der genannten physikalischen Größe im Vergleich zu einem statistisch bestimmten Grenzwert.

**17.** Programm, das in ein Informatiksystem ladbar ist, wobei das genannte Programm Anweisungen enthält, die das Umsetzen des Verfahrens gemäß irgendeinem der Ansprüche 1 bis 13 oder 15 erlaubt.

**18.** Träger von einem Computer oder einem abnehmbaren oder nicht abnehmbaren Mikroprozessor lesbaren Informationen, der Anweisungen eines Informatikprogramms aufbewahrt, **dadurch gekennzeichnet, dass** er das Umsetzen des Verfahrens gemäß irgendeinem der Ansprüche 1 bis 13 oder 15 erlaubt.


**Claims**

**1.** Method for securing a document, **characterized in that** it comprises:

- a step of statistically determining the average magnitude of an unpredictable print variation dot by dot of at least one geometric characteristic among the size, shape and/or position of the dot,
- a step of printing a distribution of dots on said document, said printing, as a result of unanticipated unknowns in printing, causing an unpredictable variation, dot by dot, of at least one geometric characteristic of the printed dots among the size, shape and/or position, and
- prior to said print step, a step of generating said distribution of dots so that dots of said generated distribution have at least one geometric characteristic, among the size, shape and/or position, that can vary from one dot to the next, the geometric amplitude of the generated variation being of the order of magnitude of the average magnitude of said statistically determined unpredictable print variation;

the printed dot distribution therefore representing two variations, one generated and one unpredictable dot by dot.

**2.** Method according to claim 1, **characterized in that**, during the step of generating the dot distribution, the geometric amplitude of the generated variations is less than the dimension of the dots.

**3.** Method according to any one of claims 1 and 2 wherein, during the step of generating the dot distribution, a dot distribution is generated as a function of the unpredictable variation of the printing system used.

**4.** Method according to any one of claims 1 to 3, **characterized in that**, during the generation step, dots of the dot distribution have at least one variable geometric characteristic, said variation not being repetitive in said dot distribution.

5. Method according to any one of claims 1 to 4, **characterized in that**, during the generation step, in said dot distribution at least half the dots of said distribution are not laterally juxtaposed to four other dots of said dot distribution.

6. Method according to claim 5, **characterized in that**, during the step of generating the dot distribution, more than half the dots do not touch any other dot of said distribution.

7. Method according to any one of claims 1 to 6, **characterized in that** said generated variation corresponds to a variation in the position of dots, in at least one direction, with respect to a position where the centers of the dots are aligned on parallel lines perpendicular to said direction and separated by at least one dimension of said dots **in that** direction.

8. Method according to any one of claims 1 to 6, **characterized in that** said generated variation corresponds to a variation in at least one dimension of the dots, in at least one direction, with respect to an average dimension of said dots, **in that** direction.

9. Method according to any one of claims 1 to 6, **characterized in that** said generated variation corresponds to a variation in shape of the dots with respect to an average shape of said dots in that direction.

10. Method according to any one of claims 1 to 9, **characterized in that**, during the generation step, said dot distribution represents an encoded item of information.

11. Method according to any one of claims 1 to 10, **characterized in that** it comprises a step of capturing the image of the printed dot distribution and a step of determining a unique signature of said printed distribution, on the basis of said unpredictable print variation.

12. Method according to any one of claims 1 to 11, **characterized in that** it comprises a step of determining a magnitude representative of the unpredictable print variation, resulting from unanticipated unknowns in printing, of the printed document relative to a reference dot distribution, the step generating the dot distribution being a function of said magnitude.

13. Method according to claim 12, **characterized in that** it comprises a step of detecting a copy as a function of the magnitude representative of the unpredictable print variation, resulting from unanticipated unknowns in printing, of the tested document relative to a reference dot distribution, said copy detection step comprising a step of comparing said representative magnitude against a predefined value, and a step of deciding the authenticity of the document on the basis of the result of the comparison.

14. Device for securing a document, **characterized in that** it comprises:

- a means for statistically determining the average magnitude of an unpredictable print variation dot by dot of at least one geometric characteristic among the size, shape and/or position of the dot,
- a means for printing a distribution of dots on said document, designed so that said printing, as a result of unanticipated unknowns in printing, causes an unpredictable variation, dot by dot, of at least one geometric characteristic of the printed dots among the size, shape and/or position, and
- a means for generating said distribution adjusted, prior to the printing, to generate said distribution of dots so that dots of said generated distribution have at least one geometric characteristic, among the size, shape and/or position, that can vary among them, the geometric amplitude of the generated variation being of the order of magnitude of the average magnitude of said statistically determined unpredictable print variation;

the printed dot distribution therefore representing two variations, one generated and one unpredictable dot by dot.

15. A method of reading a dot distribution on a document, **characterized in that** it comprises:

- a step of capturing an image of said distribution of dots of the document,
- a step of determining a physical magnitude representative of a geometric variation of dots of said distribution relative to a reference dot distribution, at least one geometric characteristic variation of at least one portion of the dots of said dot distribution being of the same order of magnitude as the average of the absolute value of an unpredictable variation, dot by dot, of at least one geometric characteristic of the printed dots, the variation coming from unanticipated unknowns in printing, and

- a step of determining the authenticity of said dot distribution, on the basis of said physical magnitude compared to a threshold value determined statistically.

16. Device for reading a dot distribution on a document, **characterized in that** it comprises:

- a means for capturing an image of said distribution of dots of the document,
- a means for determining a physical magnitude representative of a geometric variation of dots of said distribution relative to a reference dot distribution, at least one geometric characteristic variation of at least one portion of the dots of said dot distribution being of the same order of magnitude as the average of the absolute value of an unpredictable variation, dot by dot, of at least one geometric characteristic of the printed dots, the variation coming from unanticipated unknowns in printing, and
- a means for determining the authenticity of said dot distribution, on the basis of said physical magnitude compared to a threshold value determined statistically.

17. Program that can be loaded in a computer system, said program containing instructions allowing the utilization of the method according to any one of claims 1 to 13 or 15.

18. Data carrier, removable or not, which can be read by a computer or microprocessor and which holds the instructions of a computer program, **characterized in that** it allows the utilization of the method according to any one of claims 1 to 13 or 15.

Figure 1

105

Figure 2

125

Figure 3

130

Figure 4

Figure 5

Position
attendue

Position
trouvée

Figure 6

Figure 7

155    156

Figure 8

161    160

Figure 9

166    165

Figure 10

Figure 11

175

Figure 12

Figure 13

180

Figure 14

201    210

ROM

211

Programm
e

CPU

RAM

217

212

Écran

213

Clavier

Interface de
communication

Réseau

202

218

214

Disque dur

221

Programme

Carte entréesortie

Lecteur de
disquettes

222

215

Disquette

Caméra numérique

224

225

Figure 15

| | |
|---|---|
| Détermination de qualité d'impression | 300 |
| Détermination de surface, résolution et densité | 302 |
| Réception d'une clé cryptographique | 304 |
| Génération de valeurs binaires | 306 |
| Assemblage des points en une image | 308 |
| Impression du document avec le MPCV | 310 |
| Capture d'une image de MPCV | 320 |
| Détermination des positions d'origine des points | 322 |
| Détermination de positions de références | 324 |
| Reconstruction d'une image | 326 |
| Détermination de zone de recherche d'un point | 328 |
| Détermination de la position du centre de chaque point dans l'image captée | 330 |

(vers étape 332, en figure 16B)

Figure 16A

(depuis étape 330, en figure 16A)

| | |
|---|---|
| Mesure de distance entre la position estimée des points et leur position captée | 332 |
| Construction d'un vecteur de caractéristiques | 334 |
| Détermination de distances euclidiennes | 340 |
| Détermination de distance moyenne | 342 |
| Comparaison de la distance moyenne à une valeur seuil | 344 |
| Détermination d'authenticité | 346 |

Figure 16B

| | |
|---|---|
| Capture d'une image d'un MPCV | 350 |
| Détermination de dimension(s) | 352 |
| Construction d'un vecteur de caractéristiques géométriques des points de l'image captée | 354 |
| Détermination d'un indice de similarité entre les vecteurs attendus et captés | 356 |
| Détermination d'authenticité | 358 |

Figure 17

| Capture d'images d'un MPCV | 402 |

↓

| Calcul d'un vecteur de caractéristiques | 404 |

↓

| Stockage du vecteur de caractéristiques avec des informations associées | 406 |

| Capture d'images d'un MPCV | 410 |

↓

| Calcul d'un vecteur de caractéristiques | 412 |

↓

| Détermination d'identité et fourniture d'informations associées | 414 |

↓

| Détermination d'authenticité | 416 |

Figure 18

| Réception de message et clé(s) | 502 |
| Chiffrement du message | 504 |
| Ajout de code détecteur d'erreurs | 506 |
| Calcul d'un message chiffré robuste aux erreurs | 508 |
| Réplication du message chiffré robuste | 510 |
| Brouillage du message répliqué | 512 |
| Génération de bits de synchronisation | 514 |
| Ajout de tuiles | 516 |
| Génération et Impression du document | 518 |

Figure 19

| Capture d'une image du document | 548 |
| Pré-traitement | 550 |
| Détermination de cellules candidates | 552 |
| Détermination de vecteurs | 554 |
| Séparation des vecteurs en deux groupes | 556 |
| Restauration de l'image du MPCV normalisée | 558 |
| Extraction d'une matrice | 560 |
| Détermination de point de départ | 562 |
| Alignement d'une grille | 564 |
| Reconstruction du message brouillé | 566 |
| Authentification / identification du document | 568 |

Figure 20

185

186

Figure 21

190

Figure 22

```
                    ┌─────────────────────────────┐
                    │            Début            │
                    └─────────────────────────────┘
                                   │
                                   ▼
                    ┌─────────────────────────────┐
                    │   Détermination d'une matrice│ ╮── 605
                    └─────────────────────────────┘
                                   │
                                   ▼
                    ┌─────────────────────────────┐
                    │      Marquage de l'objet avec│ ╮── 610
                    │      des erreurs imprévisibles│
                    └─────────────────────────────┘
                                   │
                                   ▼
                    ┌─────────────────────────────┐
                    │       Capture d'une image    │ ╮── 615
                    └─────────────────────────────┘
                                   │
                                   ▼
                    ┌─────────────────────────────┐
                    │   Traitement de l'image pour │
                    │ déterminer des caractéristiques│
                    │    des erreurs imprévisibles │ ╮── 620
                    └─────────────────────────────┘
                                   │
                                   ▼
                    ┌─────────────────────────────┐
                    │ Mémorisation de caractéristiques│ ╮── 625
                    └─────────────────────────────┘
                                   │
                                   ▼
                    ┌─────────────────────────────┐
                    │       Marquage robuste       │ ╮── 630
                    └─────────────────────────────┘
                                   │
                                   ▼
                    ┌─────────────────────────────┐
                    │             Fin             │
                    └─────────────────────────────┘
```

Figure 23

Figure 24

Figure 25

Figure 26

Figure 27

| | |
|---|---|
| Réception d'une clé cryptographique | 701 |
| Génération de valeurs binaires aléatoires | 702 |
| Assemblage des valeurs binaires en un motif | 703 |
| Réception de surface disponible | 720 |
| Génération d'images du motif à différentes résolutions | 721 |
| Impression des différentes images | 722 |
| Capture d'images des motifs imprimés | 723 |
| Calcul d'empreintes (voir étapes 711 à 715) | 724 |
| Calcul de scores de similarité | 725 |
| Sélection d'une résolution | 726 |
| Impression d'objet avec motif identifiant | 727 |
| Détermination de la position du motif identifiant | 711 |
| Extraction de valeurs de points du motif identifiant | 712 |
| Calcul d'une transformée en cosinus discrète | 713 |
| Sélection de coefficients de la transformée | 714 |
| Déterminations de valeurs extrêmes | 731 |
| Détermination du nombre de bits nécessaires | 732 |
| Normalisation des coefficients | 733 |
| Multiplication par nombre de valeurs possibles | 734 |
| Ordonnancement des coefficients en un vecteur | 715 |

Figure 28A

| | |
|---|---|
| Détermination d'empreinte (voir étapes 711 à 715) | 741 |
| Calcul de similarité avec empreintes mémorisées | 742 |
| Sélection de similarité maximale | 743 |
| Similarité maximale valide si supérieure à un seuil | 744 |
| Sélection des informations de traçabilité associées | 745 |
| Sinon, similarité non valide | 746 |
| Extraction des informations de traçabilité | 747 |
| Réception d'informations complémentaires | 748 |
| Recherche dans une base de données | 749 |

| | |
|---|---|
| Détermination d'empreinte (voir étapes 711 à 715) | 751 |
| Réception d'empreinte pré-calculée | 752 |
| Calcul de similarité | 753 |
| Similarité valide si supérieure à un seuil | 754 |
| Sinon, similarité non valide | 756 |

Figure 28B

| Identification et vérification du motif identifiant | 761 |

↓

| Réception de clé(s) pour authentification | 762 |

↓

| Détermination si original ou copie | 763 |

| Accord de licence | 771 |

↓

| Transmission de motifs identifiants | 772 |

↓

| Impression du nombre prévu de documents | 773 |

↓

| Transmission de nombre et/ou de documents | 774 |

↓

| Impression et assemblage du produit fini | 775 |

↓

| Prises d'images des documents | 776 |

↓

| Mémorisation en base de données | 777 |

↓

| Calcul des empreintes (voir étapes 711 à 715) | 778 |

↓

| Mémorisation des empreintes par impression | 779 |

↓

| Mémorisation des empreintes en base de données | 780 |

Figure 28C

Figure 29

Figure 30

801

802

803

Figure 31

Figure 32

Figure 33

| Génération d'une image à imprimer | 851 |
|---|---|
| Marquage d'une plaque d'impression | 852 |
| Impression d'au moins un document | 854 |
| Capture d'image à haute résolution | 855 |
| Extraction de caractéristique géométrique | 856 |
| Mémorisation en base de données | 857 |
| Capture d'image à haute résolution | 860 |
| Extraction de caractéristique géométrique | 861 |
| Mémorisation en base de données | 862 |
| Mesure de corrélations | 863 |
| Détermination de plus haute corrélation | 864 |
| Plus haute corrélation supérieure à une valeur limite prédéterminée ? | 865 |

Oui ↓      ↓ Non

866 — Document légitime, plaque identifiée par la plus haute corrélation

Document illégitime — 867

Figure 34

**RÉFÉRENCES CITÉES DANS LA DESCRIPTION**

**Documents brevets cités dans la description**

- EP 1672593 A
- US 4423415 A
- WO 2006016114 A
- US 2006104103 A
- WO 2006087351 A
- CH 694233

**Littérature non-brevet citée dans la description**

- **M. KUTTER.** Watermarking resisting to translation, rotation and scaling. *Proc. of SPIE: Multimedia systems and applications,* Novembre 1998, vol. 3528, 423-431